# EUROPÄISCHE PATENTSCHRIFT

(11) **EP 4 016 663 B1**
(45) Veröffentlichungstag und Bekanntmachung des Hinweises auf die Patenterteilung: **11.10.2023**
(21) Anmeldenummer: 20214828.4
(22) Anmeldetag: 17.12.2020
(51) Int. Cl.: H01M 4/04, H01M 4/137, H01M 4/1399, H01M 4/62, H01M 10/0525, H01M 4/60, H01M 6/40, H01M 10/05

(54) **ELEKTRODENMATERIAL FÜR DEN DRUCK VON POLYMERBATTERIEN**
ELECTRODE MATERIAL FOR THE PRINTING OF POLYMER BATTERIES
MATIÈRE D'ÉLECTRODE POUR L'IMPRESSION DES BATTERIES POLYMÈRES

(43) Veröffentlichungstag der Anmeldung: 22.06.2022
(73) Patentinhaber: InnovationLab GmbH, 69115 Heidelberg (DE)
(72) Erfinder: BAKUMOV, Vadym, 45772 Marl (DE); WILD, Andreas, 45721 Haltern am See (DE); COCHET, Sébastien, 40885 Ratingen (DE); HÄHNEL, Lina, 45721 Haltern am See (DE)
(74) Vertreter: Harrison, Robert John

(56) Entgegenhaltungen:
- SHEN FENGYU ET AL: "Composite Electrode Ink Formulation for All Solid-State Batteries", JOURNAL OF THE ELECTROCHEMICAL SOCIETY, Bd. 166, Nr. 14, 1. Januar 2019 (2019-01-01), Seiten A3182-A3188, XP055798603, ISSN: 0013-4651, DOI: 10.1149/2.0141914jes Gefunden im Internet: URL:https://iopscience.iop.org/article/10. 1149/2.0141914jes/pdf>
- HAGER MARTIN D. ET AL: "Polymer-Based Batteries-Flexible and Thin Energy Storage Systems", ADVANCED MATERIALS, Bd. 32, Nr. 39, 1. Oktober 2020 (2020-10-01), Seite 2000587, XP055798763, ISSN: 0935-9648, DOI: 10.1002/adma.202000587 Gefunden im Internet: URL:https://onlinelibrary.wiley.com/doi/fu ll-xml/10.1002/adma.202000587>
- AQIL ABDELHAFID ET AL: "A new design of organic radical batteries (ORBs): carbon nanotube buckypaper electrode functionalized by electrografting", CHEMICAL COMMUNICATIONS, Bd. 51, Nr. 45, 1. Januar 2015 (2015-01-01), Seiten 9301-9304, XP055798777, ISSN: 1359-7345, DOI: 10.1039/C5CC02420J
- HERNÁNDEZ GUIOMAR ET AL: "Redox-active polyimide-polyether block copolymers as electrode materials for lithium batteries", RSC ADVANCES, Bd. 5, Nr. 22, 1. Januar 2015 (2015-01-01) , Seiten 17096-17103, XP055798785, GB ISSN: 2046-2069, DOI: 10.1039/C4RA15976D

## Beschreibung

Die vorliegende Erfindung betrifft ein Elektrodenmaterial umfassend mindestens ein organisches redoxaktives Polymer, mindestens ein Leitfähigkeitsadditiv und Polyvinylbutyral als Binder. Mit dem erfindungsgemäßen Elektrodenmaterial lassen sich organische Batterien herstellen, die verbesserte Lade- und Entladekapazitäten aufweisen. Der Erfindung betrifft auch das Elektrodenmaterial umfassende Elektroden und die Elektroden umfassende Batterien.

Das Elektrodenmaterial kann auch zum Druck von Elektroden verwendet werden.

### 1. Hintergrund der Erfindung

Organische Batterien sind elektrochemische Zellen, die ein organisches Ladungsspeichermaterial als aktives Elektrodenmaterial zur Speicherung von elektrischer Ladung verwenden. Diese Batterien haben vielerlei Vorteile und weisen einen grundsätzlich anderen Wirkmechanismus gegenüber metallbasierten Ladungsspeichermaterialien auf.

In der Literatur ist eine Vielzahl organischer Speichermaterialien beschrieben. Einen Überblick darüber geben EP 3 588 634 A1 und der Artikel S. Muench, A. Wild, C. Friebe, B. Häupler, T. Janoschka, U.S. Schubert, Chem. Rev. 2016, 116, 9438 - 9484 (im Folgenden "Muench *et al."*)*.*

Bei der Herstellung von Elektroden aus diesen organischen Speichermaterialien wird üblicherweise das Elektrodenmaterial mit einem Leitfähigkeitsadditiv, zum Beispiel einem Kohlenstoffmaterial, und einem Bindeadditiv (= "Binder") vermischt und auf ein Substrat aufgetragen. Die Auftragung der Elektrodenmaterialien erfolgt in vielen Fällen durch Beschichtung oder Druck. Diese Möglichkeit eröffnet der Technologie druckbarer Batterien vielversprechende Zukunftschancen.

Die so erhaltenen Elektroden werden im Anschluss daran mit einer Gegenelektrode in eine Batterie eingebaut. Der Aufbau einer solchen Batterie ist dem Fachmann bekannt, beschrieben zum Beispiel von Muench *et al.* In diesen Batterien kann eine Vielzahl von Elektrolyten eingesetzt werden, unter anderem Metallsalze (z. B. Lithiumsalze), Festelektrolyten (WO 2020/126200 A1) oder ionische Flüssigkeiten (S. Muench, R. Burges, A. Lex-Balducci, J.C. Brendel, C. Friebe, A. Wild, U.S. Schubert, Energy Storage Materials 2020, 25, 750 - 755).

Obwohl die so erhaltenen Elektroden gute Kapazitäten aufweisen, besteht auf diesem technischen Gebiet weiterhin das Bedürfnis, die Kapazitäten von auf organischem Ladungsspeichermaterial basierenden Elektroden zu verbessern.

Die Aufgabe der vorliegenden Erfindung besteht deshalb darin, ein bevorzugt druckfähiges, bevorzugter tiefdruckfähiges, Elektrodenmaterial zur Verfügung zu stellen, mit welchem organische Elektroden und Batterien mit hoher Lade- und Entladekapazität hergestellt werden können.

### 2. Kurzbeschreibung der Erfindung

Die Aufgabe wurde dadurch gelöst, dass im Elektrodenmaterial Polyvinylbutyral (im Folgenden "PVB") als Binder eingesetzt wird. Mit diesem Elektrodenmaterial lassen sich überraschenderweise Elektroden und Batterien mit einer signifikant höheren Lade- und Entladekapazität herstellen im Vergleich zu herkömmlichen Batterien, die auf Bindern, wie sie etwa in WO 2017/207325 A1 oder WO 2018/046387 A1 beschrieben sind und cellulosebasiert sind, beruhen. Dieses Elektrodenmaterial zeichnet sich insbesondere dadurch aus, dass es in Druckverfahren, bevorzugt Tiefdruckverfahren, eingesetzt werden kann.

Die vorliegende Erfindung betrifft somit in einem ersten Aspekt ein Elektrodenmaterial umfassend
(i) mindestens ein organisches redoxaktives Polymer **P_{Redox},**
(ii) mindestens ein Leitfähigkeitsadditiv **L,**
(iii) mindestens einen Binder **B,**
(iv) gegebenenfalls mindestens eine ionische Flüssigkeit **IL₁,**
gekennzeichnet dadurch,
dass der Binder **B** mindestens ein Polymer **P_{B1}** umfasst, welches a Wiederholungseinheiten der folgenden Strukturformel **(I)** umfasst: 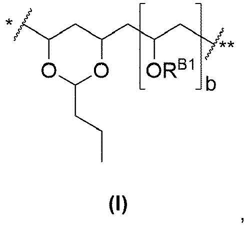
wobei R^{B1} Wasserstoff oder Acetyl ist,
a eine ganze Zahl ≥ 10 ist,
b eine ganze Zahl ≥ 0 ist,
und wobei die durch "*" gekennzeichnete Bindung einer Wiederholungseinheit der Strukturformel **(I)** an die durch "**" gekennzeichnete Bindung der benachbarten Wiederholungseinheit der Strukturformel **(I)** bindet,
und die vom Polymer **P_{B1}** umfassten Wiederholungseinheiten der Strukturformel **(I)** gleich oder verschieden voneinander sind.

In einem zweiten Aspekt betrifft die vorliegende Erfindung eine Elektrode umfassend das erfindungsgemäße Elektrodenmaterial.

In einem dritten Aspekt betrifft die vorliegende Erfindung eine Ladungsspeichereinheit umfassend mindestens eine erfindungsgemäße Elektrode.

In einem vierten Aspekt betrifft die vorliegende Erfindung die Verwendung des erfindungsgemäßen Elektrodenmaterials als Tinte in Druckverfahren.

### 3. Detaillierte Beschreibung der Erfindung

### 3.1 Organisches redoxaktives Polymer P_{Redox}

Das erfindungsgemäße Elektrodenmaterial umfasst mindestens ein organisches redoxaktives Polymer **P_{Redox}.**

Organische redoxaktive Polymere **P_{Redox}** sind dem Fachmann bekannt und beispielsweise beschrieben in der US 2016/0233509 A1, der US 2017/0114162 A1, der US 2017/0179525 A1, der US 2018/0108911 A1, der US 2018/0102541 A1, der WO 2017/207325 A1, der WO 2015/032951 A1. Einen Überblick über weitere verwendbaren organischen redoxaktiven Polymere geben Muench *et al.*

Das organische redoxaktive Polymer **P_{Redox}** kann gemäß dem Fachmann bekannter Verfahren erhalten werden. Die entsprechenden Verfahren sind von Muench *et al.* zusammengefasst. Daneben wird die Synthese der organischen redoxaktiven Polymere **P_{Redox}** umfassend eine redoxaktive aromatische Imidfunktion, z. B. Phthalimidfunktion, in WO 2015/003725 A1 und US 4,898,915 A beschrieben.

Daneben sind dem Fachmann organische redoxaktive Polymere **P_{Redox}** umfassend eine redoxaktive aromatische Funktion umfassend mindestens ein stabiles Sauerstoffradikal bzw. die Synthese der entsprechenden organischen redoxaktiven Polymere **P_{Redox}** auch aus WO 2017/207325 A1, EP 1 752 474 A1, WO 2015/032951 A1, CN 104530424 A, CN 104530426 A, T. Suga, H. Ohshiro, S. Sugita, K. Oyaizu, H. Nishide, Adv. Mater. 2009, 21, 1627 - 1630 und T. Suga, S. Sugita, H. Ohshiro, K. Oyaizu, H. Nishide, Adv. Mater. 2011, 3, 751 - 754 bekannt.

Daneben ist die Synthese von organischen redoxaktiven Polymeren **P_{Redox}** umfassend eine redoxaktive Anthrachinon-/ Carbazolfunktion und die Synthese der organischen redoxaktiven Polymere **P_{Redox}** umfassend eine redoxaktive Benzochinonfunktion auch beschrieben in bzw. für den Fachmann aufgrund seines Fachwissens routinemäßig möglich aus WO 2015/132374 A1, WO 2015/144798 A1, EP 3 279 223 A1, WO 2018/024901 A1, US 2017/0077518 A1, US 2017/0077517 A1, US 2017/0104214 A1, D. Schmidt, B. Häupler, C. Stolze, M.D. Hager, U.S. Schubert, J. Polym. Sci., Part A: Polym. Chem. 2015, 53, 2517 - 2523, M.E. Speer, M. Kolek, J.J. Jassoy, J. Heine, M. Winter, P.M. Bieker, B. Esser, Chem. Commun. 2015, 51, 15261 - 15264 und M. Baibarac, M. Lira-Cantú, J. Oró Sol, !. Baltog, N. Casañ-Pastor, P. Gomez-Romero, Compos. Sci. Technol. 2007, 67, 2556 - 2563.

Daneben ist die Synthese von organischen redoxaktiven Polymeren **P_{Redox}** umfassend eine redoxaktive Dialkoxybenzolfunktion auch beschrieben in WO 2017/032583 A1, EP 3 136 410 A1, EP 3 135 704 A1, WO 2017/032582 A1, P. Nesvadba, L. B. Folger, P. Maire, P. Novak, Synth. Met. 2011, 161, 259 - 262; W. Weng, Z.C. Zhang, A. Abouimrane, P.C. Redfern, L.A. Curtiss, K. Amine, Adv. Funct. Mater. 2012, 22, 4485 -4492.

Daneben ist die Synthese von organischen redoxaktiven Polymeren **P_{Redox}** umfassend eine redoxaktive Triphenylaminfunktion auch beschrieben in JP 2011-74316 A, JP 2011-74317 A.

Daneben ist die Synthese von organischen redoxaktiven Polymeren **P_{Redox}** umfassend eine redoxaktive Viologenfunktion auch beschrieben in CN 107118332 A und N. Sano, W. Tomita, S. Hara, C.-M. Min, J.-S. Lee, K. Oyaizu, H. Nishide, ACS Appl. Mater. Interfaces 2013, 5, 1355 - 1361.

Daneben ist die Synthese von organischen redoxaktiven Polymeren **P_{Redox}** umfassend eine redoxaktive Ferrocenfunktion auch beschrieben in K. Tamura, N. Akutagawa, M. Satoh, J. Wada, T. Masuda, Macromol. Rapid Commun. 2008, 29, 1944 - 1949.

Das mindestens eine organische redoxaktive Polymer **P_{Redox}** ist erfindungsgemäß insbesondere aus der Gruppe bestehend aus Polyimiden und organischen redoxaktiven Polymeren umfassend m Wiederholungseinheiten der folgenden Strukturformel **(II),** bevorzugt aus organischen redoxaktiven Polymeren umfassend m Wiederholungseinheiten der folgenden Strukturformel **(II),** mit 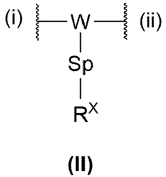 ausgewählt,
wobei m eine ganze Zahl ≥ 4, insbesondere eine ganze Zahl ≥ 10, bevorzugt eine ganze Zahl ≥ 100, bevorzugter eine ganze Zahl im Bereich von 100 bis 10⁹, noch bevorzugter eine ganze Zahl im Bereich von 100 bis 10⁶, noch bevorzugter eine ganze Zahl im Bereich von 100 bis 10⁴, noch bevorzugter eine ganze Zahl im Bereich von 100 bis 2000 ist,
Weine organische Einheit ist,
Sp ein organischer Spacer ist,
und R^{X} eine organische redoxaktive Gruppe ist,
und wobei die durch "(i)" gekennzeichnete Bindung einer Wiederholungseinheit der Strukturformel **(II)** an die durch "(ii)" gekennzeichnete Bindung der benachbarten Wiederholungseinheit der Strukturformel **(II)** bindet,
und die vom organischen redoxaktiven Polymer **P_{Redox}** umfassten Wiederholungseinheiten der Strukturformel **(II)** gleich oder verschieden voneinander sind und bevorzugt gleich sind.

R^{X} in der Struktur **(II)** ist bevorzugt aus der Gruppe bestehend aus den folgenden Strukturformeln **(II-A), (II-B), (II-C), (II-D), (II-E), (II-F),** insbesondere **(II-A), (II-B), (II-D), (II-E), (II-F),** bevorzugt **(II-A), (II-B), (II-D), (II-E),** bevorzugter **(II-D), (II-E),** noch bevorzugter **(II-D)** ausgewählt, wobei 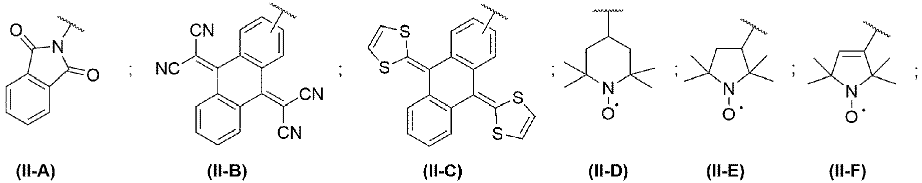 wobei in den Strukturformeln **(II-A), (II-B)** und **(II-C)** mindestens ein aromatisches Kohlenstoffatom mit einer Gruppe ausgewählt aus Alkylgruppe, die insbesondere 1 bis 10 Kohlenstoffatome umfasst, Halogengruppe, Alkoxygruppe, die insbesondere 1 bis 10 Kohlenstoffatome umfasst, Hydroxygruppe substituiert sein kann.

W in der Struktur **(II)** ist eine organische Einheit, und der Fachmann kann diese anhand seines Fachwissens auswählen. Der organische Spacer Sp verbindet die redoxaktive Einheit R^{X} und die organische Einheit W und kann ebenfalls vom Fachmann routinemäßig anhand seines Fachwissens ausgewählt werden.

Die organische Einheit W in der Struktur **(II)** ist insbesondere aus der Gruppe bestehend aus den Strukturen **(W1), (W2), (W3),** bevorzugt **(W1), (W2),** bevorzugter **(W1)** mit 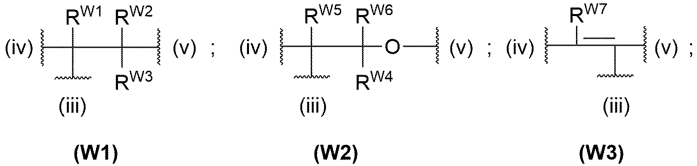 ausgewählt,
wobei im organischen redoxaktiven Polymer **P_{Redox}** jeweils die durch "(iv)" gekennzeichnete Bindung einer Strukturformel **(W1), (W2), (W3)** an die durch "(v)" gekennzeichnete Bindung der benachbarten Strukturformel **(W1), (W2)** bzw. **(W3)** bindet,
wobei jeweils die durch "(iii)" gekennzeichnete Bindung die Bindung zu Sp kennzeichnet,
und wobei R^{W1}, R^{W2}, R^{W3}, R^{W4}, R^{W5}, R^{W6}, R^{W7} unabhängig voneinander aus der Gruppe bestehend aus Wasserstoff, Alkylgruppe, Haloalkylgruppe, -COOR^{W8} mit R^{W8} = H oder Alkyl, bevorzugt aus der Gruppe bestehend aus Wasserstoff, Alkylgruppe, -COOH, -COOCH₃, bevorzugter aus der Gruppe bestehend aus Wasserstoff, Alkylgruppe mit 1 bis 6 Kohlenstoffatomen, -COOH, - COOCH₃, bevorzugter aus Wasserstoff, Methylgruppe, -COOH, -COOCH₃, noch bevorzugter aus Wasserstoff, Methyl ausgewählt sind,
wobei die Einheit W in der Strukturformel **(II)** besonders bevorzugt die Strukturformel **(W1)** aufweist und dann noch bevorzugter R^{W1} = H oder Methyl, R^{W2}, R^{W3} = H, noch bevorzugter R^{W1} = Methyl, R^{W2}, R^{W3} = H sind,
und wobei Sp in der Struktur **(II)** aus der Gruppe bestehend aus direkter Bindung, **(Sp1), (Sp2),** bevorzugt direkte Bindung, **(Sp2),** bevorzugter **(Sp2)** mit
   **(Sp1):** 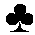 -(O)_{pA1}-[C=O]_{pA2}-(O)_{pA3}-B^{Sp}-(O)_{qA1}-[C=O]_{qA2}-(O)_{qA3}- 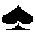 ,
   **(Sp2):** 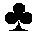 -(Y^{SP2})_{qA4}-[C=O]_{qA5}-(X^{SP2})_{qA6}- 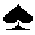
ausgewählt ist,
wobei pA1, pA2, pA3 jeweils 0 oder 1 sind, wobei der Fall "pA2 = 0, pA1 = pA3 = 1" ausgeschlossen ist,
wobei qA1, qA2, qA3 jeweils 0 oder 1 sind, wobei der Fall "qA2 = 0, qA1 = qA3 = 1" ausgeschlossen ist,
wobei qA4, qA5, qA6 jeweils 0 oder 1 sind, wobei mindestens einer von qA4, qA5, qA6 = 1 ist und wobei der Fall "qA5 = 0, qA4 = qA6 = 1" ausgeschlossen ist,
wobei X^{SP2}, Y^{SP2} unabhängig voneinander jeweils NH oder O, bevorzugt beide O sind,
wobei B^{Sp} aus der Gruppe bestehend aus
zweiwertiger (hetero)aromatischer Rest,
zweiwertiger, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest ausgewählt ist,
wobei B^{SP} bevorzugt Phenylen, Alkylen, bevorzugter Phenylen, Alkylen mit 1 bis 10, bevorzugter 1 bis 6 Kohlenstoffatomen ist,
und wobei in den Fällen, in denen Sp an ein von Kohlenstoff verschiedenes Atom des Restes R^{X} bindet, für die Struktur **(Sp1)** die zusätzliche Bedingung "qA3 = 0, qA2 = 1, qA1 = 1 oder qA3 = qA2 = qA1 = 0 oder qA3 = 0, qA2 = 1, qA1 = 0", bevorzugt die Bedingung "qA3 = qA2 = qA1 = 0", gilt, und für die Struktur **(Sp2)** die zusätzliche Bedingung "qA6 = 0, qA5 = 1, qA4 = 1 oder qA6 = 0, qA5 = 1, qA4 = 0" gilt,
und wobei in den Fällen, in denen Sp an ein Kohlenstoffatom des Restes R^{X} bindet, für die Struktur (Sp2) bevorzugt ist, dass "qA6 = 1, qA5 = 1, qA4 = 0" gilt,
und wobei " 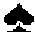 " die zu R^{X} weisende Bindung bezeichnet,
und wobei " 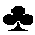 " die zu W weisende Bindung bezeichnet.

Es wird darauf verwiesen, dass die Bedingung "wobei mindestens einer von qA4, qA5, qA6 = 1" für **(Sp2)** sich lediglich auf die Definition der jeweiligen Variablen qA4, qA5, qA6 bezieht und nicht ausschließt, dass der Rest Sp in der Strukturformel **(II)** auch eine direkte Bindung sein kann.

Bevorzugter ist der Rest Sp aus der Gruppe bestehend aus direkte Bindung, 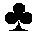 -[C=O]-(O)- 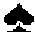 , 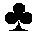 -[C=O]-(NH)- 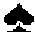 ausgewählt, noch bevorzugter aus der Gruppe bestehend aus direkte Bindung, 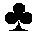 -[C=O]-(O)- 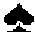 ausgewählt, wobei " 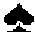 " die zu R^{X} weisende Bindung bezeichnet, und wobei " 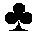 " die zu W weisende Bindung bezeichnet. Am allerbevorzugtesten ist der Rest Sp eine Gruppe der Struktur 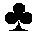 -[C=O]-(O)- 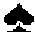 , wobei " 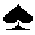 " die zu R^{X} weisende Bindung bezeichnet, und wobei " 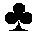 " die zu W weisende Bindung bezeichnet.

In einer anderen bevorzugten Ausführungsform des erfindungsgemäßen Elektrodenmaterials ist das organische redoxaktive Polymer **P_{Redox}** ein Polyimid, welches n Wiederholungseinheiten ausgewählt aus den folgenden Strukturformeln **(III-A), (III-B), (III-C), (III-D),** insbesondere **(III-C)** und **(III-D),** bevorzugt **(III-D),** umfasst: 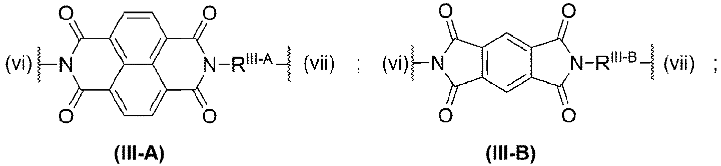 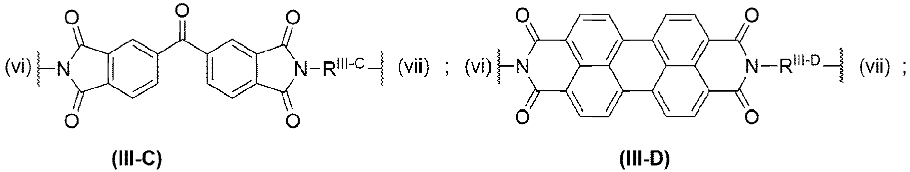
wobei R^{III-A}, R^{III-B}, R^{III-C}, R^{III-D} unabhängig voneinander jeweils aus der Gruppe bestehend aus direkter Bindung, Carbonylgruppe, Alkylengruppe, zweiwertige aromatische Kohlenwasserstoffgruppe, wobei die Alkylengruppe von einer Carbonylgruppe unterbrochen sein kann, ausgewählt sind,
und wobei in den Strukturformeln **(III-A), (III-B), (III-C), (III-D)** mindestens ein aromatisches Kohlenstoffatom mit einer Gruppe ausgewählt aus Alkyl, Halogen, Alkoxy, OH substituiert sein kann,
und wobei n eine ganze Zahl ≥ 4, bevorzugt eine ganze Zahl ≥ 10, bevorzugter eine ganze Zahl ≥ 100, noch bevorzugter eine ganze Zahl im Bereich 100 bis 10⁹, noch mehr bevorzugter eine ganze Zahl im Bereich 100 bis 10⁶, noch mehr bevorzugter eine ganze Zahl im Bereich 100 bis 10⁴, noch mehr bevorzugter eine ganze Zahl im Bereich 100 bis 2000 ist,
und wobei die durch "(vi)" gekennzeichnete Bindung einer Wiederholungseinheit der Strukturformel **(III-A), (III-B), (III-C)** bzw. **(III-D)** jeweils an die durch "(vii)" gekennzeichnete Bindung der benachbarten Wiederholungseinheit bindet.

Insbesondere sind R^{III-A}, R^{III-B}, R^{III-C}, R^{III-D} unabhängig voneinander jeweils aus der Gruppe bestehend aus direkter Bindung, Carbonylgruppe, Alkylengruppe mit 1 bis 10, bevorzugt 1 bis 6, noch bevorzugter 1 bis 2 Kohlenstoffatomen, Phenylen, Tolylen, 4,4'-Methylenbis(phenylen) ausgewählt.

Das vom erfindungsgemäßen Elektrodenmaterial umfasste mindestens eine organische redoxaktive Polymer **P_{Redox}** ist in einer besonders bevorzugten Ausführungsform ausgewählt aus der Gruppe bestehend aus Polymeren umfassend m Wiederholungseinheiten der folgenden Strukturformeln **(IV-1), (IV-2), (IV-3), (IV-4),** 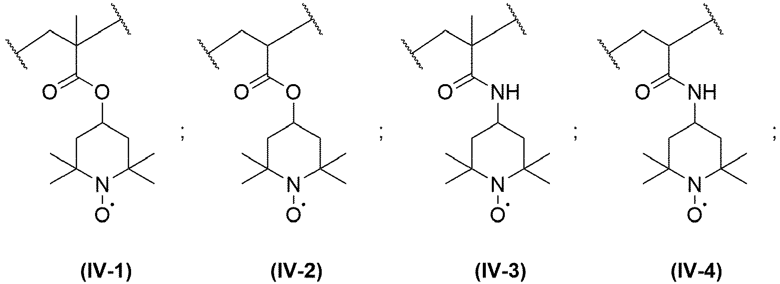
wobei m eine ganze Zahl ≥ 4, insbesondere eine ganze Zahl ≥ 10, bevorzugt eine ganze Zahl ≥ 100, bevorzugter eine ganze Zahl im Bereich von 100 bis 10⁹, noch bevorzugter eine ganze Zahl im Bereich von 100 bis 10⁶, noch bevorzugter eine ganze Zahl im Bereich von 100 bis 10⁴, noch bevorzugter eine ganze Zahl im Bereich von 100 bis 2000 ist,
und weiterhin bestehend aus Polyimiden umfassend n Wiederholungseinheiten ausgewählt aus den vorgenannten Strukturformeln **(III-A), (III-B), (III-C), (III-D),** bevorzugt **(III-C), (III-D),** bevorzugter **(III-D),** in denen R^{III-A}, R^{III-B}, R^{III-C}, R^{III-D} unabhängig voneinander jeweils aus der Gruppe bestehend aus direkte Bindung, Carbonylgruppe, Alkylengruppe mit 1 bis 10, bevorzugt 1 bis 6, noch bevorzugter 1 bis 2 Kohlenstoffatomen, Phenylen, Tolylen, 4,4'-Methylenbis(phenylen) ausgewählt sind, bevorzugt in denen R^{III-A}, R^{III-B}, R^{III-C}, R^{III-D} unabhängig voneinander jeweils aus der Gruppe bestehend aus direkte Bindung, Carbonylgruppe, Alkylengruppe mit 1 bis 2 Kohlenstoffatomen, 2,4-Tolylen, 2,6-Tolylen, 4,4'-Methylenbis(phenylen) ausgewählt sind, bevorzugt in denen R^{III-A}, R^{III-B}, R^{III-C}, R^{III-D} unabhängig voneinander jeweils aus der Gruppe bestehend aus direkte Bindung, Carbonylgruppe, Alkylengruppe mit 1 bis 2 Kohlenstoffatomen ausgewählt sind.

Das vom erfindungsgemäßen Elektrodenmaterial umfasste mindestens eine organische redoxaktive Polymer **P_{Redox}** ist in einer besonders bevorzugten Ausführungsform ausgewählt aus der Gruppe bestehend aus m Wiederholungseinheiten der vorbeschriebenen Strukturformeln **(IV-1), (IV-2),** bevorzugt **(IV-1),** wobei m eine ganze Zahl ≥ 4, insbesondere eine ganze Zahl ≥ 10, bevorzugt eine ganze Zahl ≥ 100, bevorzugter eine ganze Zahl im Bereich von 100 bis 10⁹, noch bevorzugter eine ganze Zahl im Bereich von 100 bis 10⁶, noch bevorzugter eine ganze Zahl im Bereich von 100 bis 10⁴, noch bevorzugter eine ganze Zahl im Bereich von 100 bis 2000 ist.

### 3.2 Leitfähigkeitsadditiv L

### 3.2.1 Bevorzugte Leitfähigkeitsadditive L

Das mindestens eine Leitfähigkeitsadditiv **L,** das vom erfindungsgemäßen Elektrodenmaterial umfasst wird, ist mindestens ein elektrisch leitendes Material, insbesondere ausgewählt aus der Gruppe bestehend aus Kohlenstoffmaterialien, elektrisch leitenden Polymeren, (Halb)metallen, (Halb)metallverbindungen, bevorzugt ausgewählt aus Kohlenstoffmaterialien, elektrisch leitenden Polymeren.

"(Halb)metalle" sind erfindungsgemäß aus der Gruppe bestehend aus Metallen, Halbmetallen ausgewählt, und sind bevorzugt Metalle.

Metalle sind insbesondere ausgewählt aus der Gruppe bestehend aus Zink, Eisen, Kupfer, Silber, Gold, Chrom, Nickel, Zinn, Indium.

Halbmetalle sind insbesondere ausgewählt aus der Gruppe bestehend aus Silicium, Germanium, Gallium, Arsen, Antimon, Selen, Tellur, Polonium

Das mindestens eine Leitfähigkeitsadditiv **L** ist bevorzugter ein Kohlenstoffmaterial. Kohlenstoffmaterialien sind insbesondere aus der Gruppe bestehend aus Kohlenstofffasern, Kohlenstoffnanoröhren (*carbon nanotubes; "*CNT"), Graphit, Graphen, Ruß, Fulleren ausgewählt.

Elektrisch leitende Polymere sind insbesondere aus der Gruppe bestehend aus Polypyrrolen, Polyanilinen, Polyphenylenen, Polypyrenen, Polyazulenen, Polynaphthylenen, Polycarbazolen, Polyindolen, Polyazepinen, Polyphenylensulfiden, Polythiophenen, Polyacetylenen, Poly(3,4-ethylendioxythiophen)polystyrensulfonat (= PEDOT:PSS), Polyazenen, Poly-(*p*-phenylenvinylenen) ausgewählt.

### 3.2.2 Bevorzugte Menge der Leitfähigkeitsadditive L

Die Menge des vom erfindungsgemäßen Elektrodenmaterial umfassten Leitfähigkeitsadditivs **L** ist nicht weiter beschränkt. Es ist jedoch bevorzugt, dass im erfindungsgemäßen Elektrodenmaterial das Verhältnis aus dem Gesamtgewicht aller Leitfähigkeitsadditive **L** bezogen auf das Gesamtgewicht aller organischen redoxaktiven Polymere **P_{Redox}** im Bereich von 0.1 bis 1000 Gew.-%, insbesondere im Bereich von 1 bis 500 Gew.-%, bevorzugt im Bereich von 10 bis 100 Gew.-%, bevorzugter im Bereich von 15 bis 80 Gew.-%, bevorzugter im Bereich von 20 bis 60 Gew.-%, bevorzugter im Bereich von 25 bis 50 Gew.-%, bevorzugter im Bereich von 30 bis 50 Gew.-% liegt.

### 3.3 Optionale Ionische Flüssigkeit IL₁

Das erfindungsgemäße Elektrodenmaterial umfasst gegebenenfalls und bevorzugt auch mindestens eine ionische Flüssigkeit **IL₁.** Die ionische Flüssigkeit **IL₁** weist insbesondere einen Schmelzpunkt ≤ 100 °C, bevorzugt < 70 °C, besonders bevorzugt < 50 °C auf.

### 3.3.1 Bevorzugte ionische Flüssigkeit IL₁

Die ionische Flüssigkeit **IL₁** ist nicht beschränkt und beispielsweise in WO 2004/016631 A1, WO 2006/134015 A1, US 2011/0247494 A1 oder US 2008/0251759 A1 beschrieben.

Insbesondere weist die ionische Flüssigkeit **IL₁,** die vom erfindungsgemäßen Elektrodenmaterial umfasst ist, die Struktur Q⁺A⁻ auf.

### 3.3.1.1 Bevorzugtes Kation Q⁺ der IL

Darin ist Q⁺ bevorzugt ein Kation, welches aus der Gruppe bestehend aus den nachfolgenden Strukturen **(Q1), (Q2), (Q3), (Q4), (Q5)** mit 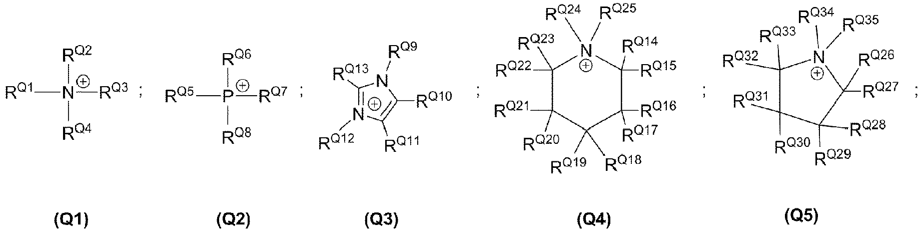 ausgewählt ist,
wobei R^{Q1}, R^{Q2}, R^{Q3}, R^{Q4}, R^{Q5}, R^{Q6}, R^{Q7}, R^{Q8} unabhängig voneinander jeweils aus der Gruppe bestehend aus Alkylgruppe, Haloalkylgruppe, Cycloalkylgruppe ausgewählt sind,
wobei R^{Q9}, R^{Q10}, R^{Q11}, R^{Q12}, R^{Q13}, R^{Q14}, R^{Q15}, R^{Q16}, R^{Q17}, R^{Q18}, R^{Q19}, R^{Q20}, R^{Q21}, R^{Q22}, R^{Q23}, R^{Q24}, R^{Q25}, R^{Q26}, R^{Q27}, R^{Q28}, R^{Q29}, R^{Q30}, R^{Q31}, R^{Q32}, R^{Q33}, R^{Q34}, R^{Q35} unabhängig voneinander jeweils aus der Gruppe bestehend aus Wasserstoff, Alkylgruppe, (Poly)ethergruppe, Haloalkylgruppe, Cycloalkylgruppe ausgewählt sind.

Bevorzugter ist Q⁺ ein Kation, welches aus der Gruppe bestehend aus den Strukturen **(Q1), (Q2), (Q3), (Q4), (Q5)** ausgewählt ist, wobei R^{Q1}, R^{Q2}, R^{Q3}, R^{Q4}, R^{Q5}, R^{Q6}, R^{Q7}, R^{Q8} unabhängig voneinander jeweils aus der Gruppe bestehend aus Alkylgruppe mit 6 bis 40, bevorzugter 10 bis 30 Kohlenstoffatomen, Cycloalkylgruppe mit 6 bis 40, bevorzugter 10 bis 30 Kohlenstoffatomen ausgewählt sind,
wobei R^{Q9}, R^{Q10}, R^{Q11}, R^{Q12}, R^{Q13}, R^{Q14}, R^{Q15}, R^{Q16}, R^{Q17}, R^{Q18}, R^{Q19}, R^{Q20}, R^{Q21}, R^{Q22}, R^{Q23}, R^{Q24}, R^{Q25}, R^{Q26}, R^{Q27}, R^{Q28}, R^{Q29}, R^{Q30}, R^{Q31}, R^{Q32}, R^{Q33}, R^{Q34}, R^{Q35} unabhängig voneinander jeweils aus der Gruppe bestehend aus Wasserstoff, Alkylgruppe mit 1 bis 25, bevorzugt 1 bis 10 Kohlenstoffatomen, (Poly)ethergruppe mit 1 bis 25, bevorzugt 1 bis 10 Kohlenstoffatomen, ausgewählt sind.

"(Poly)ethergruppe" bedeutet im Sinne der Erfindung "Polyethergruppe oder Ethergruppe", bevorzugt "Polyethergruppe".

Bevorzugter ist Q⁺ ein Kation, welches aus der Gruppe bestehend aus den Strukturen **(Q1), (Q3)** ausgewählt ist, wobei R^{Q1}, R^{Q2}, R^{Q3}, R^{Q4} unabhängig voneinander jeweils aus der Gruppe bestehend aus Alkylgruppe mit 6 bis 30, bevorzugt 10 bis 25 Kohlenstoffatomen ausgewählt sind,
und wobei R^{Q9}, R^{Q10}, R^{Q11}, R^{Q12}, R^{Q13} unabhängig voneinander jeweils aus der Gruppe bestehend aus Wasserstoff, Alkylgruppe mit 1 bis 25, bevorzugt 1 bis 10 Kohlenstoffatomen ausgewählt sind und noch bevorzugter R^{Q10}, R^{Q11}, R^{Q13} jeweils Wasserstoff sind und R^{Q9}, R^{Q12} unabhängig voneinander jeweils ein Alkylrest mit 1 bis 6 Kohlenstoffatomen sind.

Noch bevorzugter ist Q⁺ ein Kation der Struktur **(Q3),** wobei R^{Q10}, R^{Q11}, R^{Q13} jeweils Wasserstoff sind und R^{Q9} aus der Gruppe bestehend aus Alkylgruppe mit 1 bis 25, bevorzugt 1 bis 10 Kohlenstoffatomen, bevorzugter Methyl, Ethyl, n-Propyl, iso-Propyl, n-Butyl, sec-Butyl, tert-Butyl ausgewählt ist, und R^{Q12} aus der Gruppe bestehend aus Alkylgruppe mit 1 bis 25, bevorzugt 1 bis 10 Kohlenstoffatomen, bevorzugter Methyl, Ethyl, n-Propyl, iso-Propyl, n-Butyl, sec-Butyl, tert-Butyl ausgewählt ist.

Noch mehr bevorzugter ist Q⁺ ein Kation der Struktur **(Q3),** wobei R^{Q10}, R^{Q11}, R^{Q13} jeweils Wasserstoff sind und R^{Q9} aus der Gruppe bestehend aus Methyl, Ethyl, n-Butyl, bevorzugt aus der Gruppe bestehend aus Ethyl, n-Butyl ausgewählt ist, wobei R^{Q9} am bevorzugtesten Ethyl ist, und R^{Q12} aus der Gruppe bestehend aus Methyl, Ethyl ausgewählt ist, wobei R^{Q12} am bevorzugtesten Methyl ist.

Besonders bevorzugt ist als Q⁺ das 1-Ethyl-3-methylimidazoliumkation.

### 3.3.1.2 Bevorzugtes Anion A⁻ der IL

In der vorgenannten Formel Q⁺A⁻ ist A⁻ ein Anion, welches insbesondere aus der Gruppe bestehend aus Phosphat, Phosphonat, Alkylphosphonat, Monoalkylphosphat, Dialkylphosphat, Bis[trifluormethansulfonyl]imid, Alkylsulfonat, Haloalkylsulfonat, Alkylsulfat, Haloalkylsulfat, Bis[fluorsulfonyl]imid, Halogenid, Dicyanamid, Hexafluorophosphat, Sulfat, Tetrafluoroborat, Trifluormethansulfonat, Perchlorat, Hydrogensulfat, Haloalkylcarboxylat, Alkylcarboxylat, Formiat, Bisoxalatoborat, Tetrachloroaluminat, Dihydrogenphosphat, Monoalkylhydrogenphosphat, Nitrat ausgewählt ist.

In der vorgenannten Formel Q⁺A⁻ ist A⁻ bevorzugter aus der Gruppe bestehend aus Phosphat, Phosphonat, Alkylphosphonat, Monoalkylphosphat, Dialkylphosphat, Bis[trifluormethansulfonyl]imid, Alkylsulfonat, Alkylsulfat, Bis[fluorsulfonyl]imid, Halogenid, Dicyanamid, Hexafluorophosphat, Sulfat, Tetrafluoroborat, Trifluormethansulfonat, Perchlorat, Hydrogensulfat, Alkylcarboxylat, Formiat, Bisoxalatoborat, Tetrachloroaluminat, Dihydrogenphosphat, Monoalkylhydrogenphosphat, Nitrat ausgewählt, wobei die Alkylgruppen in Alkylphosphonat, Monoalkylphosphat, Dialkylphosphat, Alkylsulfonat, Alkylsulfat, Alkylcarboxylat, Monoalkylhydrogenphosphat jeweils 1 bis 10, bevorzugt 1 bis 6, noch bevorzugter 1 bis 4 Kohlenstoffatome aufweisen.

In der vorgenannten Formel Q⁺A⁻ ist A⁻ bevorzugter aus der Gruppe bestehend aus Dialkylphosphat, Bis[trifluormethansulfonyl]imid, Alkylsulfonat, Alkylsulfat, Bis[fluorsulfonyl]imid, Chlorid Dicyanamid, Hexafluorophosphat, Tetrafluoroborat, Trifluormethansulfonat, Perchlorat, Acetat, Proprionat, Formiat, Tetrachloroaluminat, Monoalkylhydrogenphosphat, Nitrat ausgewählt, wobei die Alkylgruppen in Dialkylphosphat, Alkylsulfonat, Monoalkylhydrogenphosphat jeweils 1 bis 10, bevorzugt 1 bis 6, noch bevorzugter 1 bis 4 Kohlenstoffatome aufweisen.

In der vorgenannten Formel Q⁺A⁻ ist A⁻ noch mehr bevorzugter aus der Gruppe bestehend aus Diethylphosphat, Bis[trifluormethansulfonyl]imid, Methylsulfonat, Methylsulfat, Bis[fluorsulfonyl]imid, Chlorid Dicyanamid, Hexafluorophosphat, Tetrafluoroborat, Trifluormethansulfonat, Perchlorat, Acetat, Proprionat, Formiat, Tetrachloroaluminat, Monoethylhydrogenphosphat, Nitrat ausgewählt.

In der vorgenannten Formel Q⁺A⁻ ist A⁻ noch mehr bevorzugter aus der Gruppe bestehend aus Methylsulfonat, Methylsulfat, Trifluormethansulfonat, Bis[trifluormethansulfonyl]imid, Diethlyphosphat, Dicyanamid, am bevorzugtesten aus der Gruppe bestehend aus Trifluormethansulfonat, Bis[trifluormethansulfonyl]imid ausgewählt, am allerbevorzugtesten Trifluormethansulfonat .

### 3.3.2 Masse der eingesetzten IL₁

Die Masse der vom erfindungsgemäßen Elektrodenmaterial umfassten ionischen Flüssigkeit **IL₁** ist nicht weiter beschränkt.

Es ist in den Ausführungsformen, in denen das erfindungsgemäße Elektrodenmaterial mindestens eine ionische Flüssigkeit **IL₁** umfasst, jedoch bevorzugt, dass das Verhältnis des Gesamtgewichts aller vom Elektrodenmaterial umfassten ionischen Flüssigkeiten **IL₁** bezogen auf das Gesamtgewicht aller vom Elektrodenmaterial umfassten organischen redoxaktiven Polymere **P_{Redox}** im Bereich von 0.1 bis 1000 Gew.-% liegt, insbesondere im Bereich von 1 bis 500 Gew.-%, bevorzugt im Bereich von 1 bis 100 Gew.-%, bevorzugter im Bereich von 5 bis 80 Gew.-%, bevorzugter im Bereich von 10 bis 70 Gew.-%, bevorzugter im Bereich von 15 bis 60 Gew.-%, bevorzugter im Bereich von 20 bis 50 Gew.-%, bevorzugter im Bereich von 20 bis 45 Gew.-%, bevorzugter im Bereich von 25 bis 40 Gew.-%, bevorzugter im Bereich von 28 bis 35 Gew.-% liegt.

### 3.4 Binder B

Das erfindungsgemäße Elektrodenmaterial umfasst mindestens einen Binder **B** und ist dadurch gekennzeichnet,
dass der Binder **B** mindestens ein Polymer **P_{B1}** umfasst, welches a Wiederholungseinheiten der folgenden Strukturformel **(I)** umfasst: 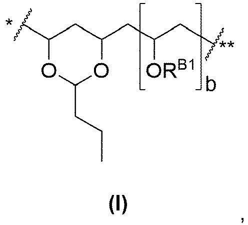
wobei R^{B1} Wasserstoff oder Acetyl ist,
a eine ganze Zahl ≥ 10, insbesondere eine ganze Zahl im Bereich von 10 bis 10⁶, bevorzugt eine ganze Zahl im Bereich von 10 bis 10⁵, bevorzugter eine ganze Zahl im Bereich von 10 bis 10⁴, noch bevorzugter eine ganze Zahl im Bereich von 20 bis 5000, noch bevorzugter eine ganze Zahl im Bereich von 50 bis 2000, noch bevorzugter eine ganze Zahl im Bereich von 70 bis 700, ist,
b eine ganze Zahl ≥ 0, insbesondere eine ganze Zahl im Bereich von 0 bis 5000, bevorzugt eine ganze Zahl im Bereich von 0 bis 1000, bevorzugter eine ganze Zahl im Bereich von 0 bis 100, noch bevorzugter eine ganze Zahl im Bereich von 0 bis 70, noch bevorzugter eine ganze Zahl im Bereich von 0 bis 50, noch bevorzugter eine ganze Zahl im Bereich von 0 bis 30, noch bevorzugter eine ganze Zahl im Bereich von 0 bis 20, noch bevorzugter eine ganze Zahl im Bereich von 0 bis 4, noch bevorzugter eine ganze Zahl im Bereich von 0 bis 2, am bevorzugtesten 0 oder 1, ist,
und wobei die durch "*" gekennzeichnete Bindung einer Wiederholungseinheit der Strukturformel **(I)** an die durch "**" gekennzeichnete Bindung der benachbarten Wiederholungseinheit der Strukturformel **(I)** bindet,
und die vom Polymer **P_{B1}** umfassten Wiederholungseinheiten der Strukturformel **(I)** gleich oder verschieden voneinander sind.

Es versteht sich von selbst, dass für den Fall, in dem für eine Wiederholungseinheit b ≥ 2 gilt, die einzelnen Reste R^{B1} innerhalb dieser Wiederholungseinheit gleich oder unterschiedlich voneinander sein können, also innerhalb dieser Wiederholungseinheit entweder alle Wasserstoff oder alle Acetyl sind oder R^{B1} innerhalb dieser Wiederholungseinheit teilweise für Wasserstoff und teilweise für Acetyl steht.

Das Polymer **P_{B1}** umfasst erfindungsgemäß demnach auch ein Polymer, welches mindestens eine Einheit der folgenden Strukturformel **(V)** umfasst: 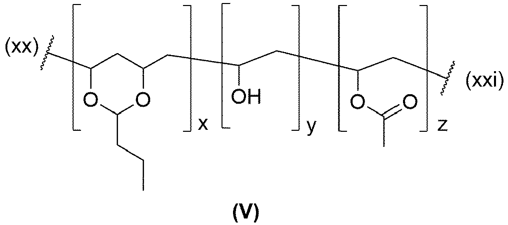 in denen
x eine ganze Zahl ≥ 10, insbesondere eine ganze Zahl im Bereich von 10 bis 10⁶, bevorzugt eine ganze Zahl im Bereich von 10 bis 10⁵, bevorzugter eine ganze Zahl im Bereich von 10 bis 10⁴, noch bevorzugter eine ganze Zahl im Bereich von 20 bis 5000, noch bevorzugter eine ganze Zahl im Bereich von 50 bis 2000, noch bevorzugter eine ganze Zahl im Bereich von 70 bis 700, ist,
y, z unabhängig voneinander jeweils eine ganze Zahl ≥ 0, insbesondere eine ganze Zahl im Bereich von 0 bis 5000, bevorzugt eine ganze Zahl im Bereich von 0 bis 1000, bevorzugter eine ganze Zahl im Bereich von 0 bis 100, noch bevorzugter eine ganze Zahl im Bereich von 0 bis 70, noch bevorzugter eine ganze Zahl im Bereich von 0 bis 50, noch bevorzugter eine ganze Zahl im Bereich von 0 bis 30, noch bevorzugter eine ganze Zahl im Bereich von 0 bis 20, noch bevorzugter eine ganze Zahl im Bereich von 0 bis 4, noch bevorzugter eine ganze Zahl im Bereich von 0 bis 2, am bevorzugtesten 0 oder 1, sind,
und wobei, wenn das Polymer **P_{B1}** mehrere Einheiten der Strukturformel **(V)** umfasst, die Einheiten der Strukturformel **(V)** dann gleich oder verschieden voneinander sind und dann außerdem die durch "(xx)" gekennzeichnete Bindung einer Wiederholungseinheit der Strukturformel **(V)** an die durch "(xxi)" gekennzeichnete Bindung der benachbarten Wiederholungseinheit der Strukturformel **(V)** bindet.

"Acetyl" ist eine Gruppe der folgenden chemischen Formel:

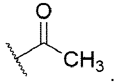

In einer bevorzugten Ausführungsform ist das Verhältnis aus dem Gesamtgewicht aller vom Polymer **P_{B1}** umfassten Wiederholungseinheiten der Strukturformel **(Ib)** zum Gesamtgewicht aller vom Polymer **P_{B1}** umfassten Wiederholungseinheiten der Strukturformeln **(la)** und **(Ib)** > 0, und liegt insbesondere im Bereich von > 0 bis 90 %, bevorzugt im Bereich von 1 bis 80 %, bevorzugter im Bereich von 5 bis 70 %, bevorzugter im Bereich von 10 bis 60 %, noch bevorzugter im Bereich von 15 bis 50 %, noch bevorzugter im Bereich von 16 bis 45 %, noch bevorzugter im Bereich von 20 bis 40 %, noch bevorzugter im Bereich von 25 bis 31 %, noch bevorzugter im Bereich von 27 bis 30 %, noch bevorzugter im Bereich von 28 bis 29 %,
wobei **(la)** und **(Ib)** jeweils die folgenden Strukturformeln aufweisen: 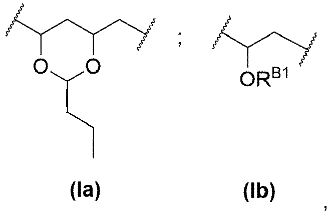
und wobei R^{B1} Wasserstoff oder Acetyl ist.

In dieser Ausführungsform ist es bevorzugt, dass in 0 bis 66 %, insbesondere in 1 bis 57 %, bevorzugt in 2 bis 50 %, noch bevorzugter in 3.7 bis 44 %, noch bevorzugter in 3.7 bis 35 %, noch bevorzugter in 3.7 bis 27 %, noch bevorzugter in 3.7 bis 25 %, noch bevorzugter in 3.7 bis 22 %, noch bevorzugter in 3.7 bis 19 %, noch bevorzugter in 3.7 bis 16.7 %, noch bevorzugter in 4.2 bis 5.5 %, noch bevorzugter in 4.7 bis 5.5 % aller vom Polymer **P_{B1}** umfassten Wiederholungseinheiten der Struktur **(Ib)** R^{B1} = Acetyl ist und in den übrigen vom Polymer **P_{B1}** umfassten Wiederholungseinheiten der Struktur **(Ib)** R^{B1} = Wasserstoff ist.

Der Anteil der Wiederholungseinheiten der Strukturformeln **(Ia)** und **(Ib)** sowie der Anteil an Wiederholungseinheiten der Struktur **(Ib),** in denen R^{B1} Acetyl oder Wasserstoff ist, in einem gegebenen Polymer kann durch den Fachmann mit ihm bekannten Verfahren wie etwa NMR, IR oder durch eine Titriermethode (Alkalimetrie), wie sie in US 6,743,859 B2 beschrieben ist, insbesondere NMR, bestimmt werden.

Es ist bevorzugt, dass das Verhältnis des Gesamtgewichts aller vom erfindungsgemäßen Elektrodenmaterial umfassten Binder **B** bezogen zum Gesamtgewicht aller vom erfindungsgemäßen Elektrodenmaterial umfassten organischen redoxaktiven Polymere **P_{Redox}** im Bereich 0.001 bis 100 Gew.-%, bevorzugter im Bereich 0.1 bis 90 Gew.-%, noch bevorzugter im Bereich 3 bis 70 Gew.-%, bevorzugter im Bereich 5 bis 50 Gew.-%, bevorzugter im Bereich 8 bis 20 Gew.-% liegt, und am bevorzugtesten 13 bis 17 Gew.-% beträgt.

Das erfindungsgemäße Polymer **P_{B1}** kann auch Polyethyleneinheiten aufweisen.

Die Herstellung von PVB ist dem Fachmann bekannt und durch Umsetzung von Polyvinylalkohol (PVOH) mit Butanal erhältlich. Soll das erfindungsgemäße Polymer **P_{B1}** auch Polyethyleneinheiten aufweisen, kann bei der Herstellung anstatt PVOH Ethylen-Vinylalkohol-Copolymer (EVOH) (beispielsweise von Kuraray unter der Marke Exceval^{®} vertrieben) eingesetzt werden.

In einer weiteren bevorzugten Ausführungsform umfasst der mindestens eine Binder **B** mindestens ein weiteres, vom Polymer **P_{B1}** verschiedenes Polymer **P_{B2},** welches a' Wiederholungseinheiten der folgenden Strukturformel **(I')** umfasst: 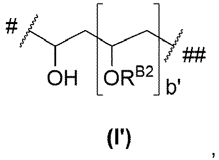
wobei R^{B2} Acetyl ist,
a' eine ganze Zahl ≥ 10, insbesondere eine ganze Zahl im Bereich von 10 bis 10⁶, bevorzugt eine ganze Zahl im Bereich von 20 bis 20000, bevorzugter eine ganze Zahl im Bereich von 200 bis 2000, noch bevorzugter eine ganze Zahl im Bereich von 70 bis 400 ist,
b' eine ganze Zahl ≥ 0, insbesondere eine ganze Zahl im Bereich von 0 bis 5000, bevorzugt eine ganze Zahl im Bereich von 0 bis 1000, bevorzugter eine ganze Zahl im Bereich von 0 bis 100, noch bevorzugter eine ganze Zahl im Bereich von 0 bis 70, noch bevorzugter eine ganze Zahl im Bereich von 0 bis 50, noch bevorzugter eine ganze Zahl im Bereich von 0 bis 30, noch bevorzugter eine ganze Zahl im Bereich von 0 bis 20, noch bevorzugter eine ganze Zahl im Bereich von 0 bis 4, noch bevorzugter eine ganze Zahl im Bereich von 0 bis 2, am bevorzugtesten 0 oder 1 ist,
und wobei die durch "#" gekennzeichnete Bindung einer Wiederholungseinheit der Strukturformel **(I')** an die durch "##" gekennzeichnete Bindung der benachbarten Wiederholungseinheit der Strukturformel **(I')** bindet,
und die vom Polymer **P_{B2}** umfassten Wiederholungseinheiten der Strukturformel **(I')** gleich oder verschieden voneinander sind.

In einer weiteren bevorzugten Ausführungsform des erfindungsgemäßen Elektrodenmaterials ist das Verhältnis aus dem Gesamtgewicht aller vom Polymer **P_{B2}** umfassten Wiederholungseinheiten der Strukturformel **(Ib')** zum Gesamtgewicht aller vom Polymer **P_{B2}** umfassten Wiederholungseinheiten der Strukturformeln **(la')** und **(Ib')** > 0, insbesondere im Bereich von > 0 bis 85 %, bevorzugt im Bereich von 1 bis 75 %, bevorzugter im Bereich von 5 bis 65 %, bevorzugter im Bereich von 10 bis 55 % liegt, wobei **(la')** und **(Ib')** jeweils die folgenden Strukturformeln aufweisen: 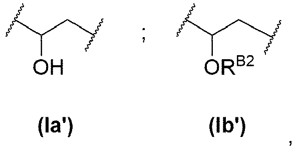 und wobei R^{B2} Acetyl ist.

In den Ausführungsformen, in denen der Binder **B** des erfindungsgemäßen Elektrodenmaterials Polymere **P_{B1}** und **P_{B2}** umfasst, ist es besonders bevorzugt, dass das Verhältnis aus dem Gesamtgewicht aller vom Binder **B** umfassten Polymere **P_{B2}** zum Gesamtgewicht aller vom Binder **B** umfassten Polymere **P_{B1}** im Bereich 99 : 1 bis 1 : 99 liegt, bevorzugt im Bereich 9 : 1 bis 1 : 9, bevorzugter im Bereich 3 : 2 bis 1 : 4, noch bevorzugter im Bereich 1 : 1 bis 3 : 7.

In einer bevorzugten Ausführungsform der vorliegenden Erfindung liegt das Verhältnis aus dem Gesamtgewicht aller vom Elektrodenmaterial umfassten Binder **B** zum Gesamtgewicht aller vom Elektrodenmaterial umfassten organischen redoxaktiven Polymere **P_{Redox}** im Bereich 0.001 bis 100 Gew.-%, bevorzugter im Bereich 0.1 bis 90 Gew.-%, noch bevorzugter im Bereich 3 bis 70 Gew.-%, noch mehr bevorzugter im Bereich 5 bis 50 Gew.-%, noch viel mehr bevorzugter 10 bis 40 Gew.-%, noch viel mehr bevorzugter im Bereich 15 bis 30 Gew.-%.

### 3.5 Lösungsmittel

Das erfindungsgemäße Elektrodenmaterial kann mindestens ein Lösungsmittel umfassen, welches sich von der **IL₁** unterscheidet. In diesen Fällen liegt das erfindungsgemäße Elektrodenmaterial typischerweise als Elektrodenslurry vor. Der Elektrodenslurry ist in diesem Fall insbesondere eine Lösung oder Suspension und umfasst das erfindungsgemäße Elektrodenmaterial. Der Elektrodenslurry ist insbesondere als Tinte in Druckverfahren verwendbar.

Erfindungsgemäß besonders geeignete Lösungsmittel haben bevorzugt einen Siedepunkt bei Normaldruck von 50 °C bis 250 °C, bevorzugt 55 °C bis 150 °C.

Erfindungsgemäß besonders geeignete Lösungsmittel sind dabei insbesondere aus der Gruppe bestehend aus Wasser, Alkoholen, Ether, Ketonen, Estern ausgewählt, bevorzugt aus der Gruppe bestehend aus Wasser, Alkoholen, Ether, Ketonen, Estern ausgewählt, noch bevorzugter aus der Gruppe bestehend aus Wasser, Alkoholen ausgewählt.

Erfindungsgemäß besonders geeignete Alkohole sind bevorzugt aus der Gruppe bestehend aus Glycol, Methanol, n-Butanol, 2-Ethylhexanol, iso-Butanol, iso-Propanol, n-Pentanol, n-Propanol, 2-Methylbutanol, Di-*iso*-butylcarbinol, Ethanol ausgewählt und bevorzugter aus der Gruppe bestehend aus Glycol, Methanol, *iso*-Propanol, *n*-Propanol, Ethanol ausgewählt.

Erfindungsgemäß besonders geeignete Ester sind bevorzugt aus der Gruppe bestehend aus *n*-Butylacetat, Propylenglycoldiacetat, *n*-Amylacetat, *iso*-Amylacetat, *iso*-Propylacetat, *iso*-Butylacetat, *n*-Propylacetat, *n*-Butylproprionat, , *n*-Pentylproprionat, *n*-Propylproprionat ausgewählt.

Erfindungsgemäß besonders geeignete Ether sind insbesondere Glycolether, die bevorzugt aus der Gruppe bestehend aus Propylenglycolmethylether, Dipropylenglycolmethylether, Tripropylenglycolmethylether, Propylenglycolmethyletheracetat, Dipropylenglycolmethyletheracetat, Propylenglycol-*n*-propylether, Dipropylenglycol-*n*-propylether, Propylenglycol-*n*-butylether, Dipropylenglycol-*n*-butylether, Propylenglycolpenylether, Dipropylenglycolphenylether, Propylenglycoldiacetat, Bisdipropylenglycol-*n*-butyletheracetat, Dipropyleneglycoldimethylether, Diethylenglycolmethylether, Triethylenglycolmethylether, Diethylenglycolethylether, Triethylenglycolethylether, Ethylenglycolpropylether, Ethylenglycol-*n*-butylether, Diethylenglycol*n*-butylether, Triethylenglycol-*n*-butylether, Ethylenglycol-*n*-butyletheracetat, Diethylenglycol*n*-butyletheracetat, Ethylenglycolhexylether, Diethylenglycolhexylether, Ethylenglycolphenylether, Diethylenglycolphenylether, *α*-Phenyl-*ω*-hydroxy-poly(oxy-1,2-ethandiyl), Ethylenglycolphenylether.

Erfindungsgemäß besonders geeignete Ketone sind bevorzugt aus der Gruppe bestehend aus Aceton, Methylethylketon, Methyl-*iso*-butylketon ,Butylketon ausgewäht.

In einer weiteren bevorzugten Ausführungsform der vorliegenden Erfindung ist das Lösungsmittel mindestens eines ausgewählt aus der Gruppe bestehend aus Methylethylketon, Ethanol, *n*-Propanol, 2-Butanol, Wasser, *iso*-Propanol, zum Beispiel eine Mischung aus Wasser und *iso*-Propanol im Gewichtsverhältnis 1 : 4.

Die Konzentration des redoxaktiven Materials, insbesondere des erfindungsgemäßen organischen redoxaktiven Polymers **P_{Redox},** zur Speicherung elektrischer Energie im oben genannten Elektrodenslurry beträgt bevorzugt zwischen 1 bis 1000 mg/ml, bevorzugt 30 bis 300 mg/ml, bevorzugter 50 bis 200 mg/ml, besonders bevorzugt 60 bis 180 mg/ml.

### 3.6 Elektrode

Die vorliegende Erfindung betrifft auch eine Elektrode (anderes Wort "Elektrodenelement") umfassend das erfindungsgemäße Elektrodenmaterial und ein Substrat.

Das Substrat des Elektrodenelements umfasst insbesondere mindestens eines ausgewählt aus der Gruppe bestehend aus leitfähigen Materialien, bevorzugt Metallen, Kohlenstoffmaterialien, Oxidsubstanzen, leitfähige Polymere. Diese leitfähigen Materialien sind bevorzugt auf nicht leitfähigen Materialien aufgebracht, insbesondere auf nicht leitfähigen Polymeren oder Celluloseverbindungen.

Bevorzugte leitfähige Polymere sind aus der Gruppe bestehend aus Polypyrrolen, Polyanilinen, Polyphenylenen, Polypyrenen, Polyazulenen, Polynaphthylenen, Polycarbazolen, Polyindolen, Polyazepinen, Polyphenylensulfiden, Polythiophenen, Polyacetylenen, Poly(3,4-ethylendioxythiophen)polystyrensulfonat (= PEDOT:PSS), Polyazenen, Poly-(*p*-phenylenvinylenen) ausgewählt.

Bevorzugte nicht leitfähige Polymere sind aus der Gruppe bestehend aus Polyethylen, Polyethylenterephthalat (= PET), Polyurethan, Polyester, Polypropylen, Polyimide, Epoxidharze ausgewählt.

Erfindungsgemäß bevorzugte Celluloseverbindungen sind Cellulose, Karton, Papier. Werden diese eingesetzt, tragen sie bevorzugt eine leitfähige Schicht. Als erfindungsgemäßes Substrat eignet sich demnach bevorzugt mindestens eine Celluloseverbindung, die eine Schicht umfassend mindestens eines ausgewählt aus Silber, Silber/Kohlenstoff, PEDOT:PSS aufweist.

Bevorzugte Substrate, die nicht leitfähige Polymere, auf denen leitfähige Materialien aufgebracht sind, umfassen, sind ausgewählt aus
- metallisiertes Polypropylen,
- metallisiertes PET,
- mit einer Oxidschicht (bevorzugt ITO, AZO) beschichtetes Polyethylenterephthalat (PET),
- mit einer Oxidschicht (bevorzugt ITO, AZO) beschichtetes Polypropylen.

Erfindungsgemäß bevorzugt als Substrat des Elektrodenelementes geeignete Metalle sind ausgewählt aus Platin, Gold, Eisen, Kupfer, Aluminium, Zink, Silber oder eine Kombination aus diesen Metallen. Diese Metalle können auch als Mischungen mit Kohlenstoff vorliegen, wie Silber/Kohlenstoff-Ableiter.

Erfindungsgemäß bevorzugte als Substrat des Elektrodenelementes geeignete Kohlenstoffmaterialien, sind ausgewählt aus Glaskohlenstoff, Graphitfolie, Graphen, Kohlenstofffelle.

Erfindungsgemäß bevorzugte als Substrat des Elektrodenelementes geeignete Oxidsubstanzen sind beispielsweise ausgewählt aus der Gruppe bestehend aus Indiumzinnoxid (ITO), Indiumzinkoxid (IZO), Aluminiumzinkoxid (AZO), Fluorzinnoxid (FTO) oder Aluminiumzinnoxid (ATO), Zinkoxid (ZO).

Die Oberflächenschicht des Elektrodenelements umfasst zumindest das erfindungsgemäße Elektrodenmaterial gemäß dem ersten Aspekt der Erfindung als redoxaktives Material zur Ladungsspeicherung.

Das erfindungsgemäße Elektrodenmaterial gemäß dem ersten Aspekt der Erfindung wird dabei insbesondere als Elektrodenslurry auf das Substrat des Elektrodenelementes aufgebracht. Der Elektrodenslurry ist in diesem Fall insbesondere eine Lösung oder Suspension und umfasst das erfindungsgemäße Elektrodenmaterial und ein Lösungsmittel wie unter Abschnitt 3.5 beschrieben.

In der Ausführungsform, in der das erfindungsgemäße Elektrodenmaterial dabei als mindestens teilweise Oberflächenbeschichtung von Elektrodenelementen für elektrische Ladungsspeicher, insbesondere Sekundärbatterien, ausgebildet ist, weist ein Elektrodenelement mindestens teilweise eine Schicht auf einer Substratoberfläche auf. Diese Schicht umfasst insbesondere das erfindungsgemäße Elektrodenmaterial.

Die Aufbringung des erfindungsgemäßen Elektrodenmaterials gemäß dem ersten Aspekt der Erfindung (anderer Ausdruck für Zusammensetzung: "Komposit") auf dem Substrat ist mit Hilfe dem Fachmann bekannter Verfahren möglich. Insbesondere wird das erfindungsgemäße Elektrodenmaterial gemäß dem ersten Aspekt der Erfindung als Elektrodenslurry auf dem Substrat mittels Rakeln, Schlitzdüsenbeschichtung, Walzen, Sprühen, Siebdruck, Tiefdruck, Tampondruck, Flexodruck, Schablonendruck aufgebracht.

### 3.7 Ladungsspeicher

Die vorliegende Erfindung betrifft auch einen elektrischen Ladungsspeicher, insbesondere eine Sekundärbatterie, umfassend mindestens eine erfindungsgemäße Elektrode.

Allgemein sind redoxaktive Elektrodenmaterialien zur Speicherung elektrischer Energie Materialien, welche elektrische Ladung beispielsweise durch Aufnahme bzw. Abgabe von Elektronen speichern und wieder abgeben kann. Das erfindungsgemäße Elektrodenmaterial kann demnach beispielsweise als aktives Elektrodenmaterial in einem elektrischen Ladungsspeicher eingesetzt werden. Solche elektrischen Ladungsspeicher zur Speicherung elektrischer Energie sind insbesondere aus der Gruppe bestehend aus Primärbatterien, Sekundärbatterien (auch "Akkumulatoren" genannt), Redox-Flowbatterien, Superkondensatoren ausgewählt.

Bevorzugt handelt es sich bei dem elektrischen Ladungsspeicher um eine Primär- oder Sekundärbatterie, noch bevorzugter um eine Sekundärbatterie. Der erfindungsgemäße Ladungsspeicher, bevorzugt die Batterie, umfasst in einer bevorzugten Ausführungsform mindestens eine erfindungsgemäße Elektrode, mindestens einen Elektrolyten und gegebenenfalls einen Separator. Noch bevorzugter umfasst der erfindungsgemäße Ladungsspeicher, bevorzugt die Batterie, mindestens zwei erfindungsgemäße, voneinander verschiedene, Elektroden, mindestens einen Elektrolyten und gegebenenfalls einen Separator.

Die Hauptaufgabe des Elektrolyten ist, die lonenleitfähigkeit zu gewährleisten, die zum Ladungsausgleich nötig ist. Der Elektrolyt der bevorzugt sekundären Batterie kann sowohl eine Flüssigkeit als auch eine oligomere oder polymere Verbindung mit hoher lonenleitfähigkeit ("*gel electrolyte"* oder "*solid state electrolyte"; "*Festelektrolyt") sein, wie er beispielsweise in der WO 2020/126200 A1 beschrieben ist. Bevorzugt ist er aber eine oligomere oder polymere Verbindung.

Ist der Elektrolyt flüssig, so setzt er sich insbesondere aus einem oder mehreren Lösungsmitteln und einem oder mehreren Leitsalzen zusammen. In diesen Fällen kann der Elektrolyt mindestens eine ionische Flüssigkeit umfassen.

Das Lösungsmittel der Elektrolyten umfasst bevorzugt unabhängig voneinander eines oder mehrere Lösungsmittel mit hohem Siedepunkt und hoher lonenleitfähigkeit, aber niedriger Viskosität, wie beispielsweise Acetonitril, Dimethylsulfoxid, Ethylencarbonat, Propylencarbonat, Dimethylcarbonat, Diethylcarbonat, Methylethylcarbonat, γ-Butyrolacton, Tetrahydrofuran, Dioxolan, 1,2-Dimethoxyethan, 1,2-Diethoxyethan, Diglyme, Triglyme, Tetraglyme, Ethylacetat, 1,3-Dioxolan, Glycerin, Polyglycerin, Ethylenglycol oder Wasser.

Das Leitsalz des Elektrolyten besteht aus einem Kation der Formel M^{e+} und einem Anion oder Formel An^{f-} der Formel (M^{e+})ₐ(An^{f-})_{b}, wobei e und f ganze Zahlen in Abhängigkeit der Ladung von M und An sind und a und b ganze Zahlen sind, welche die molekulare Zusammensetzung des Leitsalzes repräsentieren.

Als Kation des oben genannten Leitsalzes werden positiv geladene lonen, bevorzugt Metalle der ersten und zweiten Hauptgruppe, wie beispielsweise Lithium, Natrium, Kalium oder Magnesium, aber auch andere Metalle der Nebengruppen, wie Zink, sowie organische Kationen, wie beispielsweise quartäre Ammoniumverbindungen wie Tetraalkylammoniumverbindungen, verwendet.

Als Anionen des besagten Leitsalzes werden bevorzugt anorganische Anionen, wie Hexafluorophosphat, Tetrafluoroborat, Triflat, Hexafluoroarsenat, Hexafluoroantimonat, Tetrafluoroaluminat, Tetrafluoroindat, Perchlorat, Bis(oxolato)borat, Tetrachloroaluminiat, Tetrachlorogallat, aber auch organische Anionen, wie beispielsweise N(CF₃SO₂)₂⁻, CF₃SO₃⁻; Alkoholate, wie beispielsweise, *tert*-Butanolat oder *iso*-Propylalkoholat, aber auch Halogenide, wie Fluorid, Chlorid, Bromid sowie lodid, verwendet.

Werden ionische Flüssigkeiten verwendet, können diese sowohl als Lösungsmittel des Elektrolyten, als Leitsalz aber auch als kompletter Elektrolyt verwendet werden. In einer bevorzugten Ausführungsform der erfindungsgemäßen Ladungsspeichereinheit umfasst diese als Elektrolyt eine ionische Flüssigkeit **IL₂. IL₂** hat bevorzugt die vorgenannte Struktur Q⁺A⁻, wobei Q⁺ insbesondere wie unter Abschnitt 3.3.1.1 beschrieben ist und A⁻ wie unter Abschnitt 3.3.1.2 beschrieben ist. Noch bevorzugter ist im erfindungsgemäßen Ladunsspeicher **IL₂** die gleiche ionische Füssigkeit, wie sie als **IL₁** in mindestens einer Elektrode des erfindungsgemäßen Ladungsspeichers vorliegt.

Der Separator ist eine poröse Schicht, die ionendurchlässig ist und den Ladungsausgleich ermöglicht. Die Aufgabe des Separators besteht darin, die positive Elektrode von der negativen Elektrode zu trennen und den Ladungsausgleich durch Permeation von Ionen zu ermöglichen. Als Separator der Ladungsspeicher, bevorzugt der sekundären Batterie, wird insbesondere ein poröses Material (z.B. Vlies), bevorzugt eine Membran bestehend aus einer polymeren Verbindung, wie beispielsweise Polyolefin, Polyamid, oder Polyester, verwendet. Weiterhin können Separatoren aus porösen keramischen Materialien, Glasmikrofaser, verwendet werden.

Separator und Elektrolyt können auch in einem vorliegen, wie zum Beispiel im Falle der Festelektrolyten, beschrieben in WO 2020/126200 A1.

In einer weiteren bevorzugten Ausführungsform des erfindungsgemäßen Ladungsspeichers umfasst dieser mindestens zwei Elektroden, wobei mindestens eine der Elektroden mindestens ein erfindungsgemäßes Elektrodenmaterial umfasst. Insbesondere umfasst dieses erfindungsgemäße Elektrodenmaterial mindestens ein organisches redoxaktives Polymer der vorgenannten Strukturformel (II), in dem insbesondere R^{X} aus der Gruppe bestehend aus den Strukturformeln **(II-A), (II-B), (II-C), (II-D), (II-E), (II-F),** bevorzugt **(II-A), (II-B), (II-D), (II-E), (II-F),** bevorzugt **(II-D), (II-E), (II-F),** bevorzugter **(II-D), (II-E),** noch bevorzugter **(II-D)]** ausgewählt ist.

Noch bevorzugter umfasst mindestens eine andere der Elektrode in dieser Ladungsspeichereinheit ein erfindungsgemäßes Polyimid, welches bevorzugt ausgewählt ist aus den vorgenannten Strukturformeln **(III-A), (III-B), (III-C), (III-D)** [bevorzugt **(III-C)** und **(III-D),** bevorzugter **(III-D).**

### 3.8 Verwendung des erfindungsgemäßen Elektrodenmaterials

In einem weiteren Aspekt betrifft die vorliegende Erfindung die Verwendung des erfindungsgemäßen Elektrodenmaterials als Tinte in Druckverfahren, insbesondere mit Rakeln, Schlitzdüsenbeschichtung, Walzen, Sprühen, Siebdruck, Tiefdruck, Tampondruck, Flexodruck, Schablonendruck, bevorzugt Tiefdruck.

### Beispiele

### 4.1 Allgemeines

### 4.1.1 Verwendete Chemikalien

Als Polyvinylbutyral ("PVB"; CAS-Nummer: 63148-65-2) wurde Mowital^{®} B 30 T von Kuraray verwendet. Dieses hat eine chemische Struktur entsprechend der vorgenannten Strukturformel **(I),** in der a im Bereich 40 bis 600, b im Bereich 0 bis 100 liegt, worin das Verhältnis des Gesamtgewichts aller umfassten Wiederholungseinheiten der Strukturformel **(Ib)** bezogen auf das Gesamtgewicht aller umfassten Wiederholungseinheiten der Strukturformeln **(la)** und **(Ib)** im Bereich 25 bis 31 % liegt und worin 3.7 bis 16.7 % aller der durch R^{B1} gekennzeichneten Gruppen in der Struktur **(I)** Acetyl, die restlichen durch R^{B1} gekennzeichneten Gruppen in der Struktur (I) Wasserstoff sind.

Als teilverseifter Polyvinylalkohol ("PVOH"; CAS-Nummer: 9002-89-5) wurde POVAL^{™} L-8 von Kuraray (Verseifungsgrad 69.5 bis 72.5 mol-%) verwendet.

Als Hydroxypropylmethylcellulose ("HPMC"; CAS-Nummer: 9004-65-3) wurde Produkt 09963 von Sigma-Aldrich verwendet.

Als Hydroxyethylcellulose ("HEC"; CAS-Nummer: 9004-62-0) wurde Cellosize^{®} QP-40' von Union Carbide (Produkt 54290 von Sigma Aldrich) verwendet.

Als Carboxymethylcellulose Natriumsalz ("NaCMC"; CAS-Nummer: 9004-32-4) wurde MAC500 LC von Nippon Paper verwendet.

Als ionische Flüssigkeit wurde 1-Ethyl-3-methylimidazoliumtriflat ("EMIMOTf") von Solvionic verwendet.

Als Leitadditiv wurde Ruß ("Super P" von Timcal) verwendet.

P84 wurde von Evonik Industries erhalten. Das Polyimid (= "PI") hatte die folgende Struktur, wobei der Rest R in den Wiederholungseinheiten unabhängig voneinander jeweils aus 4,4'-Methylenbis(phenylen)rest, 2,4-Tolueneinheit, 2,6-Tolueneinheit ausgewählt ist.

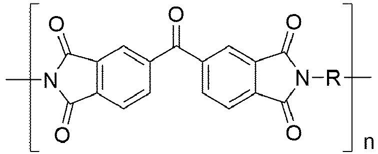

Das PTMA-Polymer wurde entsprechend WO 2018/046387 A1 synthetisiert, wobei bei der Synthese Triethylenglykoldimethacrylat zur Vernetzung zugegeben wurde. PTMA wies die folgende Struktur auf:

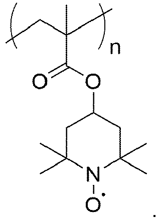

### 4.1.2 Methoden

### 4.1.2.1 Viskositätsmessungen

Bei den in der vorliegenden Beschreibung und den Beispielen genannten Viskositäten handelt es sich um dynamische Viskosität η bei 25 °C. Diese wurde mit einem Malvern Kinexus Rotationsrheometer mit Platte-Platte Geometrie gemessen. Der Durchmesser der Platten betrug 40 mm, der Abstand zwischen den Platten betrug 1 mm. Die Viskosität wurde bei steigenden Schergeschwindigkeiten zwischen 0.1 und 500 s⁻¹ gemessen, als Kennwert wurde die Viskosität bei 1 s⁻¹ herangezogen.

### 4.1.2.2 Feststoffgehalt

Bei den in der vorliegenden Beschreibung und den Beispielen genannten Feststoffgehalten handelt es sich um das Verhältnis der Gesamtmasse des Elektrodenmaterials (Aktivpolymer, Leitadditiv, Binder und ionische Flüssigkeit) bezogen auf die Gesamtmasse aus Elektrodenmaterial und Propanol-Wasser-Lösungsmittelgemisch.

In der Tabelle angegebene Kreuze "++" bis "+++++" geben an, wie gut das jeweilige Elektrodenmaterial, vom Feststoffgehalt und Viskosität zu schließen, als Tiefdrucktinte geeignet ist.

### 4.2 Erfinderisches Beispiel E1: Herstellung einer Anode mit PVB als Binder

2.2 g Polyvinylbutyral ("PVB") wurden bei 80 °C innerhalb einer Stunde in 76.3 g Lösungsmittel bestehend aus 2-Propanol mit 20 Gew.-% Wasser gerührt. Dazu wurden 4.4 g EMIMOTf und 4.4 g Super P zugegeben und die erhaltene Mischung mittels Rührwerkdissolver für 15 Minuten bei 2000 U/min verrührt. Daraufhin wurden 15.4 g Polyimid "P84 Typ 70" als Anodenaktivpolymer schrittweise beim Rühren innerhalb von 10 min zugegeben und weitere 35 min bei 2000 U/min gerührt.

Die erhaltene Dispersion wurde dreimal, jeweils fünf Minuten mit Zeitintervall von zehn Minuten bei 22000 U/min mit einem IKA Ultra Turrax^{®} behandelt. Die beschriebene Dispersion hatte einen Feststoffgehalt von 26.4 Gew.-% und zeigte strukturviskoses Verhalten mit der Viskosität von ~ 251 mPa s bei einer Scherrate von 1/s. Dadurch ist sie sehr gut insbesondere für Tiefdruck geeignet.

Die Dispersion wurde per Kastenrakel mit 200 µm Spalt auf eine Aluminiumfolie aufgetragen und anschließend bei Raumtemperatur über Nacht, danach für zwei Stunden bei 120 °C getrocknet. Die dadurch erhaltene Anodenschicht wies einen Auftrag von 27 g/m² auf.

### 4.3 Erfinderisches Beispiel E2: Herstellung einer Kathode mit PVB als Binder

1.4 g PVB wurden bei 80°C innerhalb einer Stunde in 83.2 g Lösungsmittels bestehend aus 2-Propanol mit 25 Gew.-% Wasser gerührt. Dazu wurde 2.8 g EMIMOTf und 4.2 g Super P zugegeben und die erhaltene Mischung für 15 Minuten mittels Rührwerksdissolver bei 2000 U/min verrührt.

Daraufhin wurden 8.4 g PTMA-Aktivpolymers schrittweise beim Rühren innerhalb von 60 Minuten zugegeben und weitere 30 Minuten bei 2000 U/min gerührt.

Die erhaltene Dispersion wurde dreimal, jeweils fünf Minuten mit Zeitintervall von zehn Minuten bei 22000 U/min mit einem IKA Ultra Turrax^{®} behandelt. Die beschriebene Dispersion hatte einen Feststoffgehalt von 16.8 Gew.-% und zeigte strukturviskoses Verhalten mit der Viskosität von ~ 427 mPa·s bei einer Scherrate von 1/s. Dadurch ist sie sehr gut insbesondere für Tiefdruck geeignet.

Die Dispersion wurde per Kastenrakel mit 200 µm Spalt auf eine Aluminiumfolie aufgetragen und anschließend bei Raumtemperatur über Nacht, danach für zwei Stunden bei 120 °C getrocknet. Die dadurch erhaltene Kathodenschicht wies einen Auftrag von 16 g/m² auf.

### 4.4 Erfinderisches Beispiel E3: Herstellung einer Anode mit PVB/PVOH als Binder

Eine Mischung aus 1.2 g PVB und 1.2 g teilverseiftem PVOH wurden bei 80°C innerhalb einer Stunde in 71.2 g Lösungsmittel bestehend aus 2-Propanol mit 20 Gew.-% Wasser gerührt. Dazu wurden 4.8 g EMIMOTf und 4.8 g Super P zugegeben und die erhaltene Mischung mittels Rührwerkdissolver für 15 Minuten bei 2000 U/min verrührt. Daraufhin wurden 16.8 g Polyimid "P84 Typ 70" als Anodenaktivpolymer schrittweise beim Rühren innerhalb von 10 min zugegeben und weitere 35 min bei 2000 U/min gerührt.

Die erhaltene Dispersion wurde dreimal, jeweils fünf Minuten mit Zeitintervall von zehn Minuten bei 22000 U/min mit einem IKA Ultra Turrax^{®} behandelt. Die beschriebene Dispersion hatte einen Feststoffgehalt von 28.8 Gew.-% und zeigte strukturviskoses Verhalten mit der Viskosität von ~ 378 mPa·s bei einer Scherrate von 1/s. Dadurch ist sie sehr gut insbesondere für Tiefdruck geeignet.

Die Dispersion wurde per Kastenrakel mit 200 µm Spalt auf eine Aluminiumfolie aufgetragen und anschließend bei Raumtemperatur über Nacht, danach für zwei Stunden bei 120 °C getrocknet. Die dadurch erhaltene Anodenschicht wies einen Auftrag von 28 g/m² auf.

### 4.5 Erfinderisches Beispiel E4: Herstellung einer Kathode mit PVB/PVOH als Binder

Eine Mischung aus 0.98 g PVB und 0.42 g teilverseiftem PVOH wurden bei 80°C innerhalb einer Stunde in 83.2 g Lösungsmittels bestehend aus 2-Propanol mit 20 Gew.-% Wasser gerührt. Dazu wurde 2.8 g EMIMOTf und 4.2 g Super P zugegeben und die erhaltene Mischung für 15 Minuten mittels Rührwerksdissolver bei 2000 U/min verrührt.

Daraufhin wurden 8.4 g PTMA-Aktivpolymers schrittweise beim Rühren innerhalb von 60 Minuten zugegeben und weitere 30 Minuten bei 2000 U/min gerührt.

Die erhaltene Dispersion wurde dreimal, jeweils fünf Minuten mit Zeitintervall von zehn Minuten bei 22000 U/min mit einem IKA Ultra Turrax^{®} behandelt. Die beschriebene Dispersion hatte einen Feststoffgehalt von 16.8 Gew.-% und zeigte strukturviskoses Verhalten mit der Viskosität von ~ 553 mPa s bei einer Scherrate von 1/s. Dadurch ist sie sehr gut insbesondere für Tiefdruck geeignet.

Die Dispersion wurde per Kastenrakel mit 200 µm Spalt auf eine Aluminiumfolie aufgetragen und anschließend bei Raumtemperatur über Nacht, danach für zwei Stunden bei 120 °C getrocknet. Die dadurch erhaltene Kathodenschicht wies einen Auftrag von 21 g/m² auf.

### 4.6 Vergleichsbeispiel V5: Versuch der Herstellung einer Anode mit NaCMC als Binder

1.27 g NaCMC wurde bei 80°C innerhalb einer Stunde in 84.76 g Lösungsmittel bestehend aus 2-Propanol mit 20 Gew.-% Wasser gerührt. Dazu wurden 2.54 g EMIMOTf und 2.54 g Super P zugegeben und die erhaltene Mischung mittels Rührwerkdissolver für 15 Minuten bei 2000 U/min verrührt. Daraufhin wurden 8.89 g Polyimid "P84 Typ 70" als Anodenaktivpolymer schrittweise beim Rühren innerhalb von 10 min zugegeben und weitere 35 min bei 2000 U/min gerührt.

Die erhaltene Dispersion wurde dreimal, jeweils fünf Minuten mit Zeitintervall von zehn Minuten bei 22000 U/min mit einem IKA Ultra Turrax^{®} behandelt. Die beschriebene Dispersion hatte einen Feststoffgehalt von 15.2 Gew.-%. Sie zeigte eine Viskosität von ~ 4200 mPa s bei einer Scherrate von 1/s. Dadurch ist sie für Tiefdruck ungeeignet.

Die Dispersion wurde per Kastenrakel mit 200 µm Spalt auf eine Aluminiumfolie aufgetragen und anschließend bei Raumtemperatur über Nacht, danach für zwei Stunden bei 120 °C getrocknet. Die dadurch erhaltene Anodenschicht wies einen Auftrag von 20 g/m² auf. Allerdings war sie inhomogen und haftete nicht, so dass die erhaltene Schicht als Elektrode unbrauchbar war.

### 4.7 Vergleichsbeispiel V6: Herstellung einer Anode mit HEC als Binder

2 g HEC wurden bei 80°C innerhalb einer Stunde in 76 g Lösungsmittel bestehend aus 2-Propanol mit 20 Gew.-% Wasser gerührt. Dazu wurde 4 g EMIMOTf und 4 g Super P zugegeben und die erhaltene Mischung für 15 Minuten mittels Rührwerksdissolver bei 2000 U/min verrührt. Daraufhin wurden 14 g Polyimid "P84 Typ 70" schrittweise beim Rühren innerhalb von 60 Minuten zugegeben und weitere 30 Minuten bei 2000 U/min gerührt.

Die erhaltene Dispersion wurde dreimal, jeweils fünf Minuten mit Zeitintervall von zehn Minuten bei 22000 U/min mit einem IKA Ultra Turrax^{®} behandelt. Die beschriebene Dispersion hatte einen Feststoffgehalt von 24 Gew.-%. Sie zeigte eine Viskosität von ~ 4800 mPa s bei einer Scherrate von 1/s. Dadurch ist sie für Tiefdruck ungeeignet.

Die Dispersion wurde per Kastenrakel mit 200 µm Spalt auf eine Aluminiumfolie aufgetragen und anschließend bei Raumtemperatur über Nacht, danach für zwei Stunden bei 120 °C getrocknet. Die dadurch erhaltene Anodenschicht wies einen Auftrag von 31 g/m² auf.

### 4.8 Vergleichsbeispiel V7: Herstellung einer Kathode mit HEC als Binder

1.2 g HEC wurden bei 80°C innerhalb einer Stunde in 85.6 g Lösungsmittel bestehend aus 2-Propanol mit 25 Gew.-% Wasser gerührt. Dazu wurde 2.4 g EMIMOTf und 3.6 g Super P zugegeben und die erhaltene Mischung für 15 Minuten mittels Rührwerksdissolver bei 2000 U/min verrührt.

Daraufhin wurden 7.2 g PTMA-Aktivpolymers schrittweise beim Rühren innerhalb von 60 Minuten zugegeben und weitere 30 Minuten bei 2000 U/min gerührt.

Die erhaltene Dispersion wurde dreimal, jeweils fünf Minuten mit Zeitintervall von zehn Minuten bei 22000 U/min mit einem IKA Ultra Turrax^{®} behandelt. Die beschriebene Dispersion hatte einen Feststoffgehalt von 14.4 Gew.-%. Sie zeigte eine Viskosität von ~ 1060 mPa s bei einer Scherrate von 1/s. Dadurch ist sie für Tiefdruck ungeeignet.

Die Dispersion wurde per Kastenrakel mit 200 µm Spalt auf eine Aluminiumfolie aufgetragen und anschließend bei Raumtemperatur über Nacht, danach für zwei Stunden bei 120 °C getrocknet. Die dadurch erhaltene Anodenschicht wies einen Auftrag von 13 g/m² auf.

### 4.9 Vergleichsbeispiel V8: Herstellung einer Anode mit HPMC als Binder

2 g HPMC wurden bei 80°C innerhalb einer Stunde in 76 g Lösungsmittel bestehend aus 2-Propanol mit 20 Gew.-% Wasser gerührt. Dazu wurde 4 g EMIMOTf und 4 g Super P zugegeben und die erhaltene Mischung für 15 Minuten mittels Rührwerksdissolver bei 2000 U/min verrührt. Daraufhin wurden 14 g Polyimid "P84 Typ 70" schrittweise beim Rühren innerhalb von 60 Minuten zugegeben und weitere 30 Minuten bei 2000 U/min gerührt.

Die erhaltene Dispersion wurde dreimal, jeweils fünf Minuten mit Zeitintervall von zehn Minuten bei 22000 U/min mit einem IKA Ultra Turrax^{®} behandelt. Die beschriebene Dispersion hatte einen Feststoffgehalt von 24 Gew.-%. Sie zeigte eine Viskosität von ~ 668 mPa s bei einer Scherrate von 1/s. Dadurch ist sie insbesondere für Tiefdruck geeignet.

Die Dispersion wurde per Kastenrakel mit 200 µm Spalt auf eine Aluminiumfolie aufgetragen und anschließend bei Raumtemperatur über Nacht, danach für zwei Stunden bei 120 °C getrocknet. Die dadurch erhaltene Anodenschicht wies einen Auftrag von 30 g/m² auf.

### 4.10 Vergleichsbeispiel V9: Herstellung einer Kathode mit HPMC als Binder

1.4 g HPMC wurden bei 80°C innerhalb einer Stunde in 83.2 g Lösungsmittel bestehend aus 2-Propanol mit 25 Gew.-% Wasser gerührt. Dazu wurde 2.8 g EMIMOTf und 4.2 g Super P zugegeben und die erhaltene Mischung für 15 Minuten mittels Rührwerksdissolver bei 2000 U/min verrührt.

Daraufhin wurden 8.4 g PTMA-Aktivpolymers schrittweise beim Rühren innerhalb von 60 Minuten zugegeben und weitere 30 Minuten bei 2000 U/min gerührt.

Die erhaltene Dispersion wurde dreimal, jeweils fünf Minuten mit Zeitintervall von zehn Minuten bei 22000 U/min mit einem IKA Ultra Turrax^{®} behandelt. Die beschriebene Dispersion hatte einen Feststoffgehalt von 14.4 Gew.-%. Sie zeigte eine Viskosität von ~ 463 mPa s bei einer Scherrate von 1/s. Dadurch ist sie insbesondere für Tiefdruck geeignet.

Die Dispersion wurde per Kastenrakel mit 200 µm Spalt auf eine Aluminiumfolie aufgetragen und anschließend bei Raumtemperatur über Nacht, danach für zwei Stunden bei 120 °C getrocknet. Die dadurch erhaltene Anodenschicht wies einen Auftrag von 16 g/m² auf.

### 4.11 Konstruktion der Vollzellen und Messung der Kapazität

Aus den in den Beispielen **E1** bis **E4** und **V6** bis **V9** erhaltenen, beschichteten Folie wurden Kreise gestanzt und daraus Knopfzellen (2032 Gehäuse) mit EMIMOTf Elektrolyt und mit einem Separator (Glasmikrofaser, Whatman GF/A) gebaut. Die Gewichtsverhältnisse der Zusammensetzungen (Aktivpolymer: Leitadditiv: Binder: IL EMIMOTf) wurden für Anoden bei 7 : 2 : 1 : 2 und für Kathoden bei 6 : 3 : 1 : 2 konstant gehalten.

Es wurden die folgenden Anoden und Kathoden miteinander kombiniert:

### 4.11.1 Vergleichsvollzellen:

Vollzelle aus HPMC-basierter Anode des Vergleichsbeispiels **V8** und HPMC-basierter Kathode des Vergleichsbeispiels **V9** (bei Ladung durch "▲" symbolisiert, bei Entladung durch "Δ" symbolisiert).

Vollzelle aus HEC-basierter Anode des Vergleichsbeispiels **V6** und HEC-basierter Kathode des Vergleichsbeispiels **V7** (bei Ladung durch "●" symbolisiert, bei Entladung durch "∘" symbolisiert).

### 4.11.2 Erfindungsgemäße Vollzellen:

Vollzelle aus PVB-basierter Anode des erfinderischen Beispiels **E1** und PVB-basierter Kathode des erfinderischen Beispiels **E2** (bei Ladung durch "■" symbolisiert, bei Entladung durch "□" symbolisiert).

Vollzelle aus PVB/PVOH-basierter Anode des erfinderischen Beispiels **E3** und PVB-basierter Kathode des erfinderischen Beispiels **E2** (bei Ladung durch "◆" symbolisiert, bei Entladung durch "◊" symbolisiert).

Vollzelle aus PVB/PVOH-basierter Anode des erfinderischen Beispiels **E3** und PVB/PVOHbasierter Kathode des erfinderischen Beispiels **E4** (bei Ladung durch "+" symbolisiert, bei Entladung durch "x" symbolisiert).

### 4.11.3 Messung der Kapazität der Vollzellen:

Die Kapazität der unter Punkten 4.11.1 und 4.11.2 beschriebenen Zellen wurden wie folgt gemessen. Jede Vollzelle wurde 60 Lade- und Entladezyklen unterworfen. Dabei erfolgten die ersten 20 und die letzten 20 Zyklen mit einer Ladegeschwindigkeit "C" von 0.2 C, die Zyklen 21 bis 40 mit einer Ladegeschwindigkeit von 1 C. 1 C heißt volles Laden in einer Stunde. 0.2 C bedeutet volles Laden in 5 Stunden.

Die x-Achse der Abbildung gibt den jeweiligen Ladezyklus an, die y-Achse die Kapazität in mAh g⁻¹. Die Ergebnisse sind zusammen mit den Kenngrößen des jeweiligen Beispiels in der nachfolgenden Tabelle zusammengefasst.

Die Lade- und Entladekapazitäten wurden an einem Maccor Battery Cycler gemessen. Die jeweiligen Ströme wurden entsprechend der Aktivmassen der limitierenden Elektrode berechnet.

Galvanostatisch (GS) bedeutet, dass bis zu eine Abbruchspannung mit konstantem Strom gezykelt wurde. Galvanostatisch/potentiostatisch (GSPS) bedeutet, dass sich an den Zyklus noch ein Lade-/ Entlade Prozess bei der Abbruchspannung anschloss. Zyklus 1-10 0.2C (GS), 11-20 0.2C (GSPS), 21-40 1C (GS), 41-60 (GSPS).

### 4.12 Ergebnisse

Bei Vergleich der Lade- und Entladekapazitäten zeigt sich, dass bei Einsatz der Elektroden mit den erfindungsgemäßen Bindern PVB, gegebenenfalls in Mischung mit PVOH, Vollzellen erhalten werden, die im Vergleich zu den Vollzellen mit cellulosebasierten Bindern (HEC, HMPC), soweit diese überhaupt elektrodenfähige Schichten liefern (was im Falle von NaCMC nicht gegeben ist), eine höhere Kapazität aufweisen.

| Beispiel | **E1** Anode (Erfindung) | **E2** Kathode (Erfindung) | **E3** Anode (Erfindung) | **E4** Kathode (Erfindung) | **V5** Anode (Vergleich) | **V6** Anode (Vergleich) | **V7** Kathode (Vergleich) | **V8** Anode (Vergleich) | **V9** Kathode (Vergleich) |
|---|---|---|---|---|---|---|---|---|---|
| Bindertyp | PVB | PVB | PVB: PVOH =1:1 | PVB: PVOH =7:3 | NaCMC | HEC | HEC | HPMC | HPMC |
| Binder [g] | 2.2 | 1.4 | 1.2 + 1.2 | 0.98 + 0.42 | 1.27 | 2 | 1.2 | 2 | 1.4 |
| Lösungsmittelgemisch (Gewichtsverhältnis 2-Propanol : H₂O) | 80:20 | 75:25 | 80:20 | 80:20 | 80:20 | 80:20 | 75:25 | 80:20 | 75:25 |
| Lösungsmittelgemisch [g] | 73.6 | 83.2 | 71.2 | 83.2 | 84,76 | 76 | 85.6 | 76 | 83.2 |
| Aktivpolymer | P84 Typ 70 PI | PTMA | P84 Typ 70 PI | PTMA | P84 Typ 70 PI | P84 Typ 70 PI | PTMA | P84 Typ 70 PI | PTMA |
| Aktivpolymer [g] | 15.4 | 8.4 | 16.8 | 8.4 | 8.89 | 14 | 7.2 | 14 | 8.4 |
| Leitadditiv Super P [g] | 4.4 | 4.2 | 4.8 | 4.2 | 2.54 | 4 | 3.6 | 4 | 4.2 |
| EMIMOTf [g] | 4.4 | 2.8 | 4.8 | 2.8 | 2.54 | 4 | 2.4 | 4 | 2.8 |
| Gesamtmasse [g] | 100 | 100 | 100 | 100 | 100 | 100 | 100 | 100 | 100 |
| Aktivpolymer : Leitadditiv : Binder : EMIMOTf | 7:2:1:2 | 6:3:1:2 | 7:2:1:2 | 6:3:1:2 | 7:2:1:2 | 7:2:1:2 | 6:3:1:2 | 7:2:1:2 | 6:3:1:2 |
| Feststoffgehalt (einschl. EMIMOTf) [gew.%] | 26.4 | 16.8 | 28.8 | 16.8 | 15.2 | 24 | 14.4 | 24 | 16.8 |
| Viskosität @1/s [mPa*s] | 251 | 427 | 378 | 553 | 4200 | 4800 | 1060 | 668 | 463 |
| Auftrag [g/m²] | 27 | 16 | 28 | 21 | 20 | 31 | 13 | 30 | 16 |
| geeignet für Tiefdruck? | Ja | Ja | Ja | Ja | Nein | Nein | Nein | Ja | Ja |
| Feststoff/Viskosität | +++++ | +++ | +++++ | +++ | - | ++ | ++ | ++++ | +++ |
| Kapazität nach 20 Zyklen [mAh/g(PTMA)] | 10 | | 8 | | | 4 | | 0.8 | |
| Kapazität nach 20 Zyklen [mAh/g(PTMA)] | | 12 | | | | | | | |

## Patentansprüche

1. Elektrodenmaterial umfassend
(i) mindestens ein organisches redoxaktives Polymer **P_{Redox},**
(ii) mindestens ein Leitfähigkeitsadditiv **L,**
(iii) mindestens einen Binder **B,**
(iv) gegebenenfalls mindestens eine ionische Flüssigkeit **IL₁,**
**gekennzeichnet dadurch,**
**dass** der Binder **B** mindestens ein Polymer **P_{B1}** umfasst, welches a Wiederholungseinheiten der folgenden Strukturformel **(I)** umfasst: 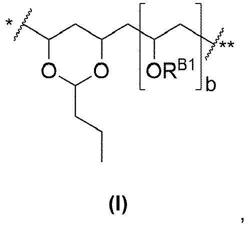
wobei R^{B1} Wasserstoff oder Acetyl ist,
a eine ganze Zahl ≥ 10 ist,
b eine ganze Zahl ≥ 0 ist,
und wobei die durch "*" gekennzeichnete Bindung einer Wiederholungseinheit der Strukturformel (I) an die durch "**" gekennzeichnete Bindung der benachbarten Wiederholungseinheit der Strukturformel (I) bindet,
und die vom Polymer **P_{B1}** umfassten Wiederholungseinheiten der Strukturformel **(I)** gleich oder verschieden voneinander sind.

2. Elektrodenmaterial nach Anspruch 1, wobei das Verhältnis aus dem Gesamtgewicht aller von Polymer **P_{B1}** umfassten Wiederholungseinheiten der Strukturformel **(Ib)** zum Gesamtgewicht aller von Polymer **P_{B1}** umfassten Wiederholungseinheiten der Strukturformeln **(la)** und **(Ib)** > 0 ist, wobei **(la)** und **(Ib)** jeweils die folgenden Strukturformeln aufweisen: 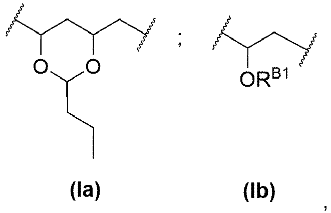 und wobei R^{B1} Wasserstoff oder Acetyl ist.

3. Elektrodenmaterial nach Anspruch 2, wobei in 0 bis 66 % aller von Polymer **P_{B1}** umfassten Wiederholungseinheiten der Struktur **(Ib)** R^{B1} = Acetyl ist und in den übrigen von Polymer **P_{B1}** umfassten Wiederholungseinheiten der Struktur **(Ib)** R^{B1} = Wasserstoff ist.

4. Elektrodenmaterial nach einem der Ansprüche 1 bis 3, wobei der mindestens eine Binder **B** mindestens ein weiteres, von Polymer **P_{B1}** verschiedenes Polymer **P_{B2}** umfasst, welches a' Wiederholungseinheiten der folgenden Strukturformel **(I')** umfasst: 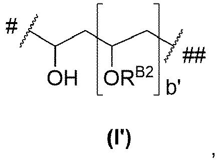
wobei R^{B2} Acetyl ist,
a' eine ganze Zahl ≥ 10 ist,
b' eine ganze Zahl ≥ 0 ist,
und wobei die durch "#" gekennzeichnete Bindung einer Wiederholungseinheit der Strukturformel **(I')** an die durch "##" gekennzeichnete Bindung der benachbarten Wiederholungseinheit der Strukturformel (I') bindet,
und die vom Polymer **P_{B2}** umfassten Wiederholungseinheiten der Strukturformel **(I')** gleich oder verschieden voneinander sind.

5. Elektrodenmaterial nach Anspruch 4, wobei das Verhältnis aus dem Gesamtgewicht aller von Polymer **P_{B2}** umfassten Wiederholungseinheiten der Strukturformel **(Ib')** zum Gesamtgewicht aller von Polymer **P_{B2}** umfassten Wiederholungseinheiten der Strukturformeln **(la')** und **(Ib')** > 0 ist, wobei **(la')** und **(Ib')** jeweils die folgenden Strukturformeln aufweisen: 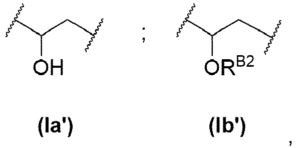 und wobei R^{B2} Acetyl ist.

6. Elektrodenmaterial nach Anspruch 4 oder 5, wobei das Verhältnis aus dem Gesamtgewicht aller von Binder **B** umfassten Polymere **P_{B2}** zum Gesamtgewicht aller von Binder **B** umfassten Polymere **P_{B1}** im Bereich 99 : 1 bis 1 : 99 liegt.

7. Elektrodenmaterial nach einem der Ansprüche 1 bis 6, wobei das Verhältnis aus dem Gesamtgewicht aller vom Elektrodenmaterial umfassten Binder **B** zum Gesamtgewicht aller vom Elektrodenmaterial umfassten organischen redoxaktiven Polymere **P_{Redox}** im Bereich 0.001 bis 100 Gew.-% liegt.

8. Elektrodenmaterial nach einem der Ansprüche 1 bis 7, wobei das mindestens eine organische redoxaktive Polymer **P_{Redox}** aus der Gruppe bestehend aus Polyimiden und organischen redoxaktiven Polymeren umfassend m Wiederholungseinheiten der folgenden Strukturformel **(II)** mit 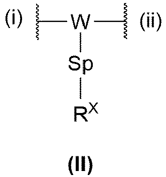 ausgewählt ist,
wobei m eine ganze Zahl ≥ 4 ist,
Weine organische Einheit ist,
Sp ein organischer Spacer ist,
und R^{X} eine organische redoxaktive Gruppe ist,
und wobei die durch "(i)" gekennzeichnete Bindung einer Wiederholungseinheit der Strukturformel **(II)** an die durch "(ii)" gekennzeichnete Bindung der benachbarten Wiederholungseinheit der Strukturformel (II) bindet,
und die vom organischen redoxaktiven Polymer **P_{Redox}** umfassten Wiederholungseinheiten der Strukturformel **(II)** gleich oder verschieden voneinander sind.

9. Elektrodenmaterial nach Anspruch 8, wobei R^{X} aus der Gruppe bestehend aus den folgenden Strukturformeln **(II-A), (II-B), (II-C), (II-D), (II-E), (II-F)** ausgewählt ist: 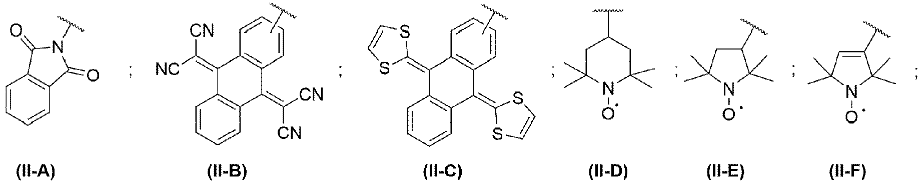 wobei in den Strukturformeln **(II-A), (II-B)** und **(II-C)** mindestens ein aromatisches Kohlenstoffatom mit einer Gruppe ausgewählt aus Alkylgruppe, Halogengruppe, Alkoxygruppe, Hydroxygruppe substituiert sein kann.

10. Elektrodenmaterial nach Anspruch 8 oder 9, wobei die organische Einheit W in der Strukturformel **(II)** aus der Gruppe bestehend aus den Strukturformeln **(W1), (W2), (W3)** mit 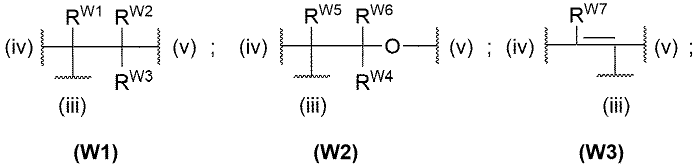 ausgewählt ist,
wobei im organischen redoxaktiven Polymer **P_{Redox}** jeweils die durch "(iv)" gekennzeichnete Bindung einer Strukturformel **(W1), (W2), (W3)** an die durch "(v)" gekennzeichnete Bindung der benachbarten Strukturformel **(W1), (W2)** bzw. **(W3)** bindet,
und wobei jeweils die durch "(iii)" gekennzeichnete Bindung die Bindung zu Sp kennzeichnet,
und wobei R^{W1}, R^{W2}, R^{W3}, R^{W4}, R^{W5}, R^{W6}, R^{W7} unabhängig voneinander jeweils aus der Gruppe bestehend aus Wasserstoff, Alkylgruppe, Haloalkylgruppe, -COOR^{W8} mit R^{W8} = H oder Alkyl ausgewählt sind,
und wobei Sp in der Strukturformel **(II)** aus der Gruppe bestehend aus direkter Bindung, **(Sp1), (Sp2)** mit
**(Sp1):** 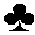 -(O)_{pA1}-[C=O]_{pA2}-(O)_{pA3}-B^{Sp}-(O)_{qA1}-[C=O]_{qA2}-(O)_{qA3}- 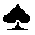 ,
**(Sp2):** 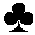 -(Y^{SP2})_{qA4}-[C=O]_{qA5}-(X^{SP2})_{qA6}- 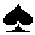
ausgewählt ist,
wobei pA1, pA2, pA3 jeweils 0 oder 1 sind, wobei der Fall "pA2 = 0, pA1 = pA3 = 1" ausgeschlossen ist,
wobei qA1, qA2, qA3 jeweils 0 oder 1 sind, wobei der Fall "qA2 = 0, qA1 = qA3 = 1" ausgeschlossen ist,
wobei qA4, qA5, qA6 jeweils 0 oder 1 sind, wobei mindestens einer von qA4, qA5, qA6 = 1 ist und wobei der Fall "qA5 = 0, qA4 = qA6 = 1" ausgeschlossen ist,
wobei X^{SP2}, Y^{SP2} unabhängig voneinander jeweils NH oder O, bevorzugt beide O sind,
wobei B^{Sp} aus der Gruppe bestehend aus
zweiwertiger (hetero)aromatischer Rest,
zweiwertiger, gegebenenfalls mit mindestens einer Gruppe ausgewählt aus Nitrogruppe, -NH₂, -CN, -SH, -OH, Halogen substituierter, und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender, aliphatischer Rest ausgewählt ist,
und wobei in den Fällen, in denen Sp an ein von Kohlenstoff verschiedenes Atom des Restes R^{X} bindet, für die Struktur **(Sp1)** die zusätzliche Bedingung "qA3 = 0, qA2 = 1, qA1 = 1 oder qA3 = qA2 = qA1 = 0 oder qA3 = 0, qA2 = 1, qA1 = 0" gilt, und für die Struktur **(Sp2)** die zusätzliche Bedingung "qA6 = 0, qA5 = 1, qA4 = 1 oder qA6 = 0, qA5 = 1, qA4 = 0" gilt,
und wobei " 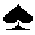 " die zu R^{X} weisende Bindung bezeichnet,
und wobei " 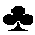 " die zu W weisende Bindung bezeichnet.

11. Elektrodenmaterial nach Anspruch 8, wobei das organische redoxaktive Polymer **P_{Redox}** ein Polyimid ist, welches n Wiederholungseinheiten ausgewählt aus den folgenden Strukturformeln **(III-A), (III-B), (III-C), (III-D)** umfasst: 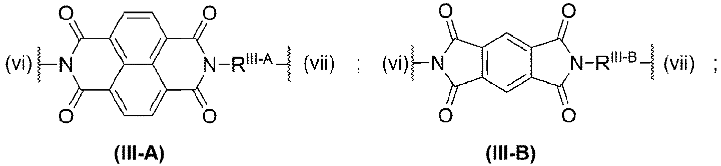 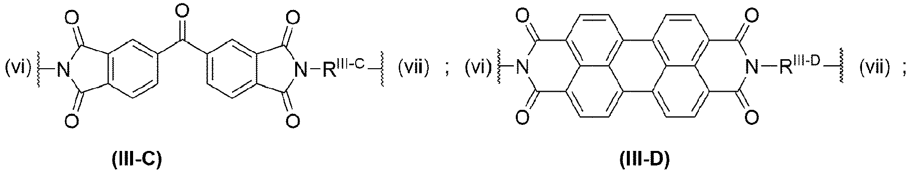
wobei R^{III-A}, R^{III-B}, R^{III-C}, R^{III-D} unabhängig voneinander jeweils aus der Gruppe bestehend aus direkte Bindung, Carbonylgruppe, Alkylengruppe, zweiwertige aromatische Kohlenwasserstoffgruppe, wobei die Alkylengruppe von einer Carbonylgruppe unterbrochen sein kann, ausgewählt sind,
und wobei in den Strukturformeln **(III-A), (III-B), (III-C), (III-D)** mindestens ein aromatisches Kohlenstoffatom mit einer Gruppe ausgewählt aus Alkyl, Halogen, Alkoxy, OH substituiert sein kann,
und wobei n jeweils eine ganze Zahl ≥ 4 ist,
und wobei die durch "(vi)" gekennzeichnete Bindung einer Wiederholungseinheit der Strukturformel **(III-A), (III-B), (III-C)** bzw. **(III-D)** jeweils an die durch "(vii)" gekennzeichnete Bindung der benachbarten Wiederholungseinheit bindet.

12. Elektrodenmaterial nach einem der Ansprüche 1 bis 11, wobei das mindestens eine Leitfähigkeitsadditiv **L** aus der Gruppe bestehend aus Kohlenstoffmaterialien, elektrisch leitenden Polymeren, Metallen, Halbmetallen, Halbmetallverbindungen, Metallverbindungen ausgewählt ist.

13. Elektrodenmaterial nach einem der Ansprüche 1 bis 12, worin das Verhältnis aus dem Gesamtgewicht aller Leitfähigkeitsadditive **L** bezogen auf das Gesamtgewicht aller organischen redoxaktiven Polymere **P_{Redox}** im Bereich von 0.1 bis 1000 Gew.-% liegt.

14. Elektrodenmaterial nach einem der Ansprüche 1 bis 13, welches mindestens eine ionische Flüssigkeit **IL,** umfasst.

15. Elektrodenmaterial nach Anspruch 14, wobei die ionische Flüssigkeit **IL,** die Struktur Q⁺A⁻ aufweist, wobei Q⁺ ein Kation ist, welches aus der Gruppe bestehend aus den nachfolgenden Strukturen **(Q1), (Q2), (Q3), (Q4), (Q5)** mit 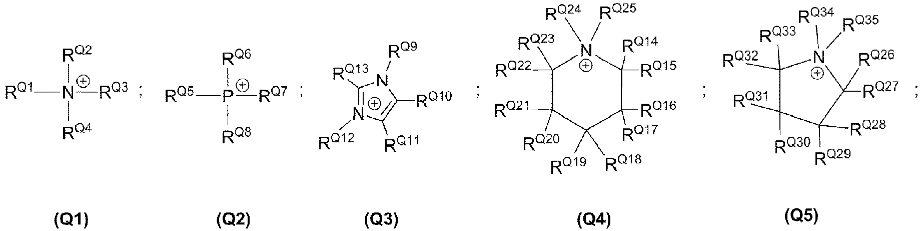 ausgewählt ist,
wobei R^{Q1}, R^{Q2}, R^{Q3}, R^{Q4}, R^{Q5}, R^{Q6}, R^{Q7}, R^{Q8} unabhängig voneinander jeweils aus der Gruppe bestehend aus Alkylgruppe, Haloalkylgruppe, Cycloalkylgruppe ausgewählt sind,
wobei R^{Q9}, R^{Q10}, R^{Q11}, R^{Q12}, R^{Q13}, R^{Q14}, R^{Q15}, R^{Q16}, R^{Q17}, R^{Q18}, R^{Q19}, R^{Q20}, R^{Q21}, R^{Q22}, R^{Q23}, R^{Q24}, R^{Q25}, R^{Q26}, R^{Q27}, R^{Q28}, R^{Q29}, R^{Q30}, R^{Q31}, R^{Q32}, R^{Q33}, R^{Q34}, R^{Q35} unabhängig voneinander jeweils aus der Gruppe bestehend aus Wasserstoff, Alkylgruppe, Ethergruppe, Polyethergruppe, Haloalkylgruppe, Cycloalkylgruppe ausgewählt sind,
und wobei A⁻ ein Anion ist, welches aus der Gruppe bestehend aus Phosphat, Phosphonat, Alkylphosphonat, Monoalkylphosphat, Dialkylphosphat, Bis[trifluormethansulfonyl]imid, Alkylsulfonat, Haloalkylsulfonat, Alkylsulfat, Haloalkylsulfat, Bis[fluorsulfonyl]imid, Halogenid, Dicyanamid, Hexafluorophosphat, Sulfat, Tetrafluoroborat, Trifluormethansulfonat, Perchlorat, Hydrogensulfat, Haloalkylcarboxylat, Alkylcarboxylat, Formiat, Bisoxalatoborat, Tetrachloroaluminat, Dihydrogenphosphat, Monoalkylhydrogenphosphat, Nitrat ausgewählt ist.

16. Elektrodenmaterial nach Anspruch 14 oder 15, wobei die ionische Flüssigkeit IL, einen Schmelzpunkt ≤ 100 °C aufweist.

17. Elektrodenmaterial nach einem der Ansprüche 14 bis 16, wobei das Verhältnis des Gesamtgewichts aller vom Elektrodenmaterial umfassten ionischen Flüssigkeiten IL, bezogen auf das Gesamtgewicht aller vom Elektrodenmaterial umfassten organischen redoxaktiven Polymere **P_{Redox}** im Bereich von 0.1 bis 1000 Gew.-% liegt.

18. Elektrodenmaterial, insbesondere Elektrodenslurry, nach einem der Ansprüche 1 bis 17, weiterhin umfassend mindestens ein Lösungsmittel ausgewählt aus der Gruppe bestehend aus Wasser, Alkoholen, Ethern, Estern, Ketone.

19. Elektrode umfassend ein Elektrodenmaterial nach einem der Ansprüche 1 bis 17 und ein Substrat.

20. Ladungsspeicher, insbesondere Sekundärbatterie, umfassend mindestens eine Elektrode nach Anspruch 19.

21. Ladungsspeicher nach Anspruch 20, umfassend mindestens zwei Elektroden, wobei mindestens eine der Elektroden mindestens ein Elektrodenmaterial gemäß Anspruch 8 umfasst.

22. Ladungsspeicher nach Anspruch 20 oder 21, weiterhin umfassend mindestens einen Elektrolyten, der insbesondere mindestens eine ionische Flüssigkeit **IL₂** umfasst.

23. Verwendung des Elektrodenmaterials nach einem der Ansprüche 1 bis 18 als Tinte in Druckverfahren.

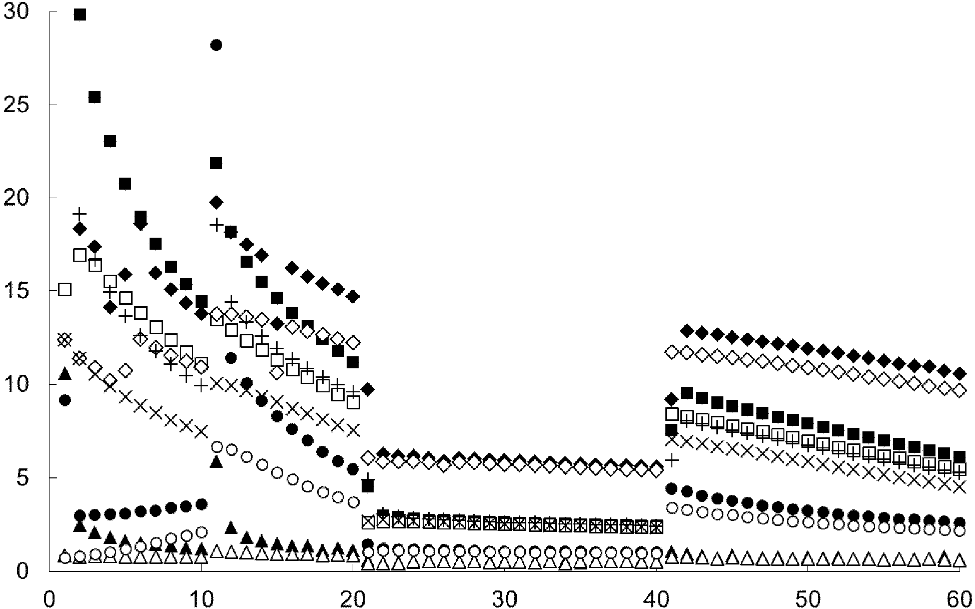

## Claims

1. An electrode material comprising:
(i) at least one organic redox active polymer **P_{Redox},**
(ii) at least one conductivity additive **L,**
(iii) at least one binder **B,**
(iv) optionally at least one ionic liquid **IL₁,**
**characterized in that**
the binder **B** comprises at least one polymer **P_{B1},** which comprises a repeating unit of the following structural formula **(I):** 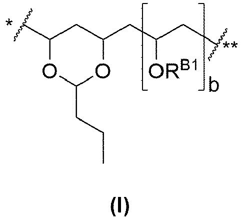
wherein R^{B1} is hydrogen or acetyl,
a is an integer ≥ 10,
b is an integer ≥ 0,
and wherein the bond marked by "*" binds a repeating unit of the structural formula **(I)** to the bond marked by "**" of the adjacent repeating unit of the structural formula **(I),**
and the repeating units of the structural formula **(I)** comprised by the polymer **P_{B1}** are identical or different from each other.

2. The electrode material according to claim 1, wherein the ratio of the total weight of all repeating units of the structural formula **(Ib)** comprised by polymer **P_{B1}** to the total weight of all repeating units of the structural formulae **(Ia)** and **(Ib)** comprised by polymer **P_{B1}** is > 0, wherein **(Ia)** and **(Ib)** each have the following structural formulae: 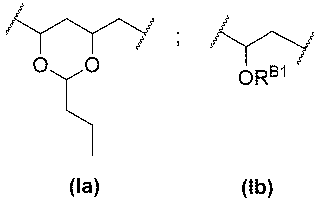 and wherein R^{B1} is hydrogen or acetyl.

3. The electrode material according to claim 2, wherein in 0 to 66% of all repeating units of the structure **(Ib)** comprised by polymer **P_{B1},** R^{B1} = acetyl, and in the remaining repeating units of the structure **(Ib)** comprised by polymer **P_{B1},** R^{B1}= hydrogen.

4. The electrode material according to any one of claims 1 to 3, wherein the at least one binder **B** comprises at least one further polymer **P_{B2}** different from polymer **P_{B1},** which comprises a' repeating units of the following structural formula **(I'):** 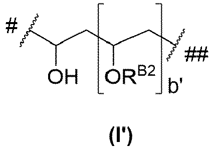
wherein R^{B2} is acetyl,
a' is an integer ≥ 10,
b' is an integer ≥ 0,
and wherein the bond marked by "#" binds a repeating unit of the structural formula **(I')** to the bond marked by "##" of the adjacent repeating unit of the structural formula **(I'),**
and the repeating units of structural formula **(I')** comprised by the polymer **P_{B2}** are identical or different from each other.

5. The electrode material according to claim 4, wherein the ratio of the total weight of all repeating units of the structural formula **(Ib')** comprised by polymer **P_{B2}** to the total weight of all repeating units of structural formulae **(Ia')** and **(lb')** comprised by polymer **P_{B2}** is > 0, wherein **(la')** and **(Ib')** each have the following structural formulae: 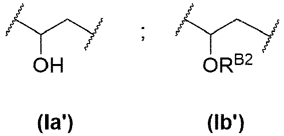 and wherein R^{B2} is acetyl.

6. The electrode material according to claim 4 or 5, wherein the ratio of the total weight of all polymers **P^{B2}** comprised by binder **B** to the total weight of all polymers **P^{B1}** comprised by binder **B** is in the range 99 : 1 to 1 : 99.

7. The electrode material according to any one of claims 1 to 6, wherein the ratio of the total weight of all binders **B** comprised by the electrode material to the total weight of all organic redox active polymers **P_{Redox}** comprised by the electrode material is in the range of 0.001 to 100% by weight.

8. The electrode material according to any one of claims 1 to 7, wherein the at least one organic redox active polymer **P_{Redox}** is selected from the group consisting of polyimides and organic redox active polymers comprising m repeating units of the following structural formula **(II):** 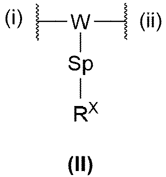
wherein m is an integer ≥ 4,
W is an organic unit,
Sp is an organic spacer,
and R^{X} is an organic redox active group,
and wherein the bond marked by "(i)" binds a repeating unit of the structural formula **(II)** to the bond marked by (ii)" of the adjacent repeating unit of the structural formula **(II),**
and the repeating units of the structural formula **(II)** comprised by the organic redox active polymer **P_{Redox}** are the identical or different from each other.

9. The electrode material according to claim 8, wherein **R^{X}** is selected from the group consisting of the following structural formulae **(II-A), (II-B), (II-C), (II-D), (II-E), (II-F):** 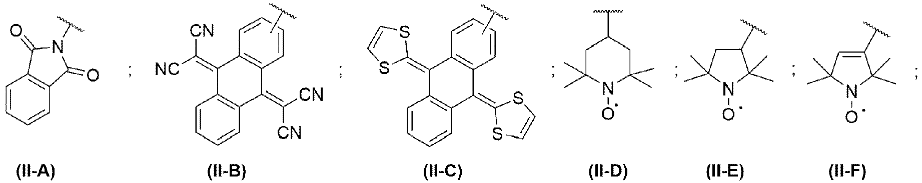 wherein, in the structural formulae **(II-A), (II-B)** and **(II-C),** at least one aromatic carbon atom can be substituted with a group selected from alkyl group, halogen group, alkoxy group, hydroxy group.

10. The electrode material according to claim 8 or 9, wherein the organic unit W in the structural formula **(II)** is selected from the group consisting of the structural formulae **(W1), (W2), (W3):** 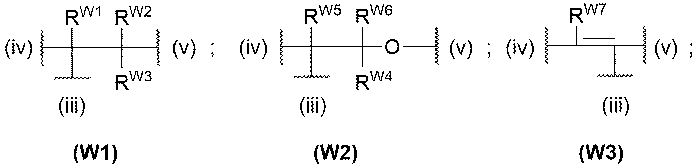
wherein, in the organic redox active polymer **P_{Redox},** each of the bond marked by "(iv)" binds a structural formula **(W1), (W2), (W3)** to the bond marked by "(v)" of the adjacent structural formula **(W1), (W2)** or **(W3).**
and wherein each bond marked by "(iii)" marks the bond to Sp,
and wherein R^{W1}, R^{W2}, R^{W3}, R^{W4}, R^{W5}, R^{W6}, R^{W7} are each independently selected from the group consisting of hydrogen, alkyl group, haloalkyl group, -COOR^{W8} R^{W8} = H or alkyl,
and wherein Sp, in the structural formula **(II),** is selected from the group consisting of direct bond, **(Sp1), (Sp2):**
**(Sp1):** 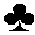 -(O)_{pA1}-[C=O]_{pA2}-(O)_{pA3}-B^{Sp}-(O)_{qA1}-[C=O]_{qA2}-(O)_{qA3}- 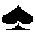 ,
**(Sp2):** 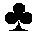 -(Y^{SP2})_{qA4}-[C=O]_{qA5}-(X^{SP2})_{qA6}- 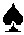
wherein pA1, pA2, pA3 are each 0 or 1, wherein the case "pA2 = 0, pA1 = pA3 = 1" is excluded,
wherein qA1, qA2, qA3 are each 0 or 1, wherein the case "qA2 = 0, qA1 = qA3 = 1" is excluded,
wherein qA4, qA5, qA6 are each 0 or 1, wherein at least one of qA4, qA5, qA6 = 1 and
wherein the case "qA5 = 0, qA4 = qA6 = 1" is excluded,
wherein X^{SP2}, Y^{SP2} are each independently NH or O, preferably both are O,
wherein B^{Sp} is selected from the group consisting of
divalent (hetero)aromatic moiety,
divalent moiety, optionally with at least one group selected from nitro group, -NH₂, -CN, - SH, -OH, halogen-substituted, and optionally with at least one group selected from ether, thioether, aminoether, carbonyl group, carboxylic acid ester, carboxylic acid amide group, sulfonic acid ester, phosphoric acid ester having an aliphatic moiety.
and wherein, in the cases in which Sp binds to an atom of the moiety R^{X} different from carbon, for the structure **(Sp1),** the additional condition "qA3 = 0, qA2 = 1, qA1 = 1 or qA3 = qA2 = qA1 = 0 or qA3 = 0, qA2 = 1, qA1 = 0" applies, and for the structure **(Sp2)** the additional condition "qA6 = 0, qA5 = 1, qA4 = 1 or qA6 = 0, qA5 = 1, qA4 = 0" applies,
and wherein " 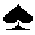 " marks the bond pointing to R^{X},
and wherein " 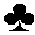 " marks the bond pointing to W.

11. The electrode material according to claim 8, wherein the organic redox active polymer **P_{Redox}** is a polyimide comprising n repeating units selected from the following structural formulae **(III-A), (III-B), (III-C), (III-D):** 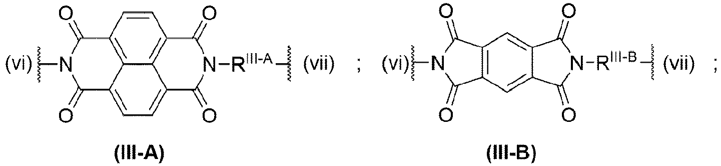 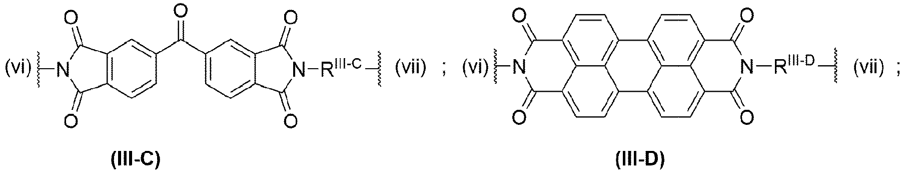
wherein R^{III-A}, R^{III-B}, R^{III-C}, R^{III-D} are each independently selected from the group consisting of direct bond, carbonyl group, alkylene group, divalent aromatic hydrocarbon group, wherein the alkylene group can be interrupted by a carbonyl group,
and wherein, in the structural formulae **(III-A), (III-B), (III-C), (III-D),** at least one aromatic carbon atom can be substituted with a group selected from alkyl, halogen, alkoxy, OH,
and wherein each n is an integer ≥ 4,
and wherein the bond marked by "(vi)" binds a repeating unit of the structural formula **(III-A), (III-B), (III-C),** or **(III-D)** each to the bond marked by "(vii)" of the adjacent repeating unit.

12. The electrode material according to any one of claims 1 to 11, wherein the at least one conductivity additive L is selected from the group consisting of carbon materials, electrically conductive polymers, metals, semimetals, semimetal compounds, metal compounds.

13. The electrode material according to any one of claims 1 to 12, wherein the ratio of the total weight of all conductivity additives L to the total weight of all organic redox active polymers **P_{Redox}** is in the range of 0.1 to 1000 wt.%.

14. The electrode material according to any one of claims 1 to 13, comprising at least one ionic liquid **IL₁.**

15. The electrode material according to claim 14, wherein the ionic liquid **IL₁** has the structure Q⁺A⁻, wherein Q⁺ is a cation selected from the group consisting of the following structures **(Q1), (Q2), (Q3), (Q4), (Q5):** 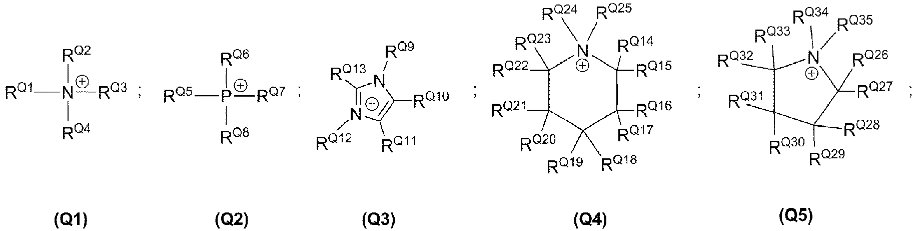
wherein R^{Q1}, R^{Q2}, R^{Q3}, R^{Q4}, R^{Q5}, R^{Q6}, R^{Q7}, R^{Q8} are each independently selected from the group consisting of alkyl group, haloalkyl group, cycloalkyl group,
wherein R^{Q9}, R^{Q10}, R^{Q11}, R^{Q12}, R^{Q13}, R^{Q14}, R^{Q15}, R^{Q16}, R^{Q17}, R^{Q18}, R^{Q19}, R^{Q20}, R^{Q21}, R^{Q22}, R^{Q23}, R^{Q24}, R^{Q25}, R^{Q26}, R^{Q27}, R^{Q28}, R^{Q29}, R^{Q30}, R^{Q31}, R^{Q32}, R^{Q33}, R^{Q34}, R^{Q35} are each independently selected from the group consisting of hydrogen, alkyl group, ether group, polyether group, haloalkyl group, cycloalkyl group,
and wherein A⁻ is an anion selected from the group consisting of phosphate, phosphonate, alkylphosphonate, monoalkylphosphate, dialkylphosphate, bis[trifluoromethanesulfonyl]imide, alkyl sulfonate, haloalkylsulfonate, alkylsulfate, haloalkylsulfate, bis[fluorosulfonyl]imide, halide, dicyanamide, hexafluorophosphate, sulfate, tetrafluoroborate, trifluoromethanesulfonate, perchlorate, hydrogen sulfate, haloalkylcarboxylate, alkylcarboxylate, formate, bisoxalatoborate, tetrachloroaluminate, dihydrogen phosphate, monoalkylhydrogen phosphate, nitrate.

16. The electrode material according to claim 14 or 15, wherein the ionic liquid IL₁ has a melting point ≤ 100 °C.

17. The electrode material according to any one of claims 14 to 16, wherein the ratio of the total weight of all ionic liquids **IL₁** comprised by the electrode material to the total weight of all organic redox active polymers **P_{Redox}** comprised by the electrode material is in the range from 0.1 to 1000 wt.%.

18. The electrode material, in particular an electrode slurry, according to any one of claims 1 to 17, further comprises at least one solvent selected from the group consisting of water, alcohols, ethers, esters, ketones.

19. An electrode comprising an electrode material according to any one of claims 1 to 17 and a substrate.

20. A charge storage device, in particular a secondary battery, comprising at least one electrode according to claim 19.

21. The charge storage device according to claim 20, comprising at least two electrodes, wherein at least one of the electrodes comprises at least one electrode material according to claim 8.

22. The charge storage device according to claim 20 or 21, further comprising at least one electrolyte, in particular comprising at least one ionic liquid **IL₂.**

23. Use of the electrode material according to any one of claims 1 to 18 as ink in printing processes.

## Revendications

1. Matériau d'électrode comprenant
(i) au moins un polymère organique à activité redox **P_{Redox},**
(ii) au moins un additif de conductivité **L,**
(iii) au moins un liant **B,**
(iv) optionnellement au moins un liquide ionique **IL₁,**
**caractérisé en ce que**
le liant **B** comprend au moins un polymère **P_{B1},** qui comprend des unités répétitives de la formule structurelle suivante **(I):** 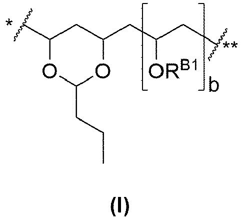
dans lequel R^{B1} est un hydrogène ou un acétyle,
a est un nombre entier ≥ 10,
b est un nombre entier ≥ 0,
et dans lequel la liaison marquée par "*" lie une unité répétitive de la formule structurelle **(I)** à la liaison marquée par "**" de l'unité répétitive adjacente de la formule structurelle **(I),**
et les unités répétitives de la formule structurelle **(I)** comprises dans le polymère **P_{B1}** sont identiques ou différentes les unes des autres.

2. Matériau d'électrode selon la revendication 1, dans lequel le rapport du poids total de toutes les unités répétitives de la formule structurelle **(Ib)** comprises dans le polymère **P_{B1}** au poids total de toutes les unités répétitives des formules structurelles **(Ia)** et **(Ib)** comprises dans le polymère **P_{B1}** est > 0, dans lequel **(Ia)** et **(Ib)** ont chacune les formules structurelles suivantes : 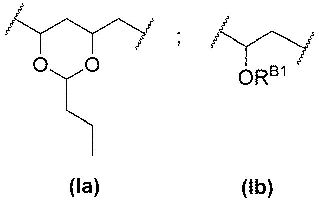 et dans lequel R^{B1} est un hydrogène ou un acétyle.

3. Matériau d'électrode selon la revendication 2, dans lequel dans 0 à 66% de toutes les unités répétitives de la structure **(Ib)** comprises dans le polymère **P_{B1},** R^{B1} = acétyle, et dans les unités répétitives restantes de la structure **(Ib)** comprises dans le polymère **P_{B1},** R^{B1} = hydrogène.

4. Matériau d'électrode selon l'une quelconque des revendications 1 à 3, dans lequel l'au moins un liant **B** comprend au moins un autre polymère **P_{B2}** différent du polymère **P_{B1},** qui comprend des unités répétitives a' de la formule structurelle suivante **(I')** : 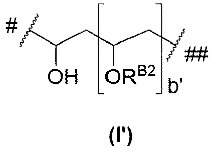
dans lequel R^{B2} est un acétyle,
a' est un nombre entier ≥ 10,
b' est un nombre entier ≥ 0,
et dans lequel la liaison marquée par "#" lie une unité répétitive de la formule structurelle **(I')** à la liaison marquée par "##" de l'unité répétitive adjacente de la formule structurelle **(I'),**
et les unités répétitives de la formule structurelle **(I')** comprises dans le polymère **P_{B2}** sont identiques ou différentes les unes des autres.

5. Matériau d'électrode selon la revendication 4, dans lequel le rapport du poids total de toutes les unités répétitives de la formule structurelle **(Ib')** comprises dans le polymère **P_{B2}** au poids total de toutes les unités répétitives des formules structurelles **(Ia')** et **(Ib')** comprises dans le polymère **P_{B2}** est > 0, dans lequel **(Ia')** et **(Ib')** ont chacune les formules structurelles suivantes : 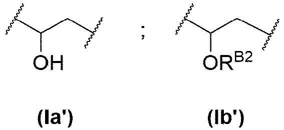 et dans lequel R^{B2} est un acétyle.

6. Matériau d'électrode selon la revendication 4 ou 5, dans lequel le rapport du poids total de tous les polymères **P_{B2}** compris dans le liant **B** au poids total de tous les polymères **P_{B1}** compris dans le liant B se situe entre 99 : 1 et 1 : 99.

7. Matériau d'électrode selon l'une quelconque des revendications 1 à 6, dans lequel le rapport du poids total de tous les liants **B** compris dans le matériau d'électrode au poids total de tous les polymères organiques à activité redox **P_{Redox}** compris dans le matériau d'électrode se situe entre 0,001 et 100 % en poids.

8. Matériau d'électrode selon l'une quelconque des revendications 1 à 7, dans lequel le au moins un polymère organique à activité redox **P_{Redox}** est choisi dans le groupe constitué par des polyimides et des polymères organiques à activité redox comprenant m unités répétitives de la formule structurelle suivante **(II)** : 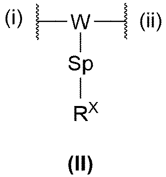
dans lequel m est un nombre entier ≥ 4,
W est une unité organique,
Sp est un espaceur organique,
et R^{X} est un groupe organique à activité redox,
et dans lequel la liaison marquée par "(i)" lie une unité répétitive de la formule structurelle **(II)** à la liaison marquée par "(ii)" de l'unité répétitive adjacente de la formule structurelle **(II),**
et les unités répétitives de la formule structurelle **(II)** comprises dans le polymère organique à activité redox **P_{Redox}** sont identiques ou différentes les unes des autres.

9. Matériau d'électrode selon la revendication 8, dans lequel R^{X} est choisi dans le groupe constitué par des formules structurelles suivantes **(II-A)**, **(II-B)**, **(II-C)**, **(II-D)**, **(II-E)**, **(II-F)** : 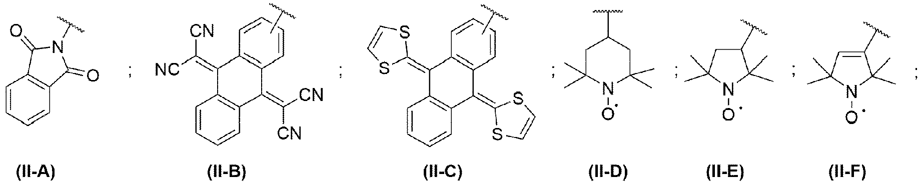 dans lequel, dans les formules structurelles **(II-A)**, **(II-B)** et **(II-C)**, au moins un atome de carbone aromatique peut être substitué par un groupe choisi parmi un groupe alkyle, un groupe halogène, un groupe alcoxy, un groupe hydroxy.

10. Matériau d'électrode selon la revendication 8 ou 9, dans lequel l'unité organique W dans la formule structurelle **(II)** est choisie dans le groupe constitué par des formules structurelles **(W1)**, **(W2)**, **(W3)** : 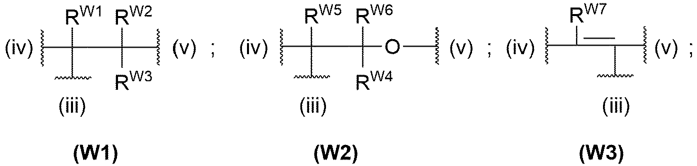
dans lequel, dans le polymère organique à activité redox **P_{Redox}**, chacune des liaisons marquées par "(iv)" lie une formule structurelle **(W1)**, **(W2)**, **(W3)** à la liaison marquée par "(v)" de la formule structurelle adjacente **(W1)**, **(W2)**, **(W3)**.
et dans lequel chacune des liaisons marquées par "(iii)" marque la liaison avec Sp,
et dans lequel R^{W1}, R^{W2}, R^{W3}, R^{W4}, R^{W5}, R^{W6}, R^{W7} sont chacun indépendamment les uns des autres choisi dans le groupe constitué par hydrogène, groupe alkyle, groupe haloalkyle, - COOR^{W8} avec R^{W8} = H ou alkyle,
et dans lequel Sp, dans la formule structurelle **(II)**, est choisi dans le groupe constitué par la liaison directe **(Sp1), (Sp2)** :
**(Sp1):** 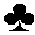 -(O)_{pA1}-[C=O]_{pA2}-(O)_{pA3}-B^{Sp}-(O)_{qA1}-[C=O]_{qA2}-(O)_{qA3}- 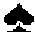 ,
**(Sp2)**: 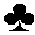 -(Y^{SP2})_{qA4}-[C=O]_{qA5}-(X^{SP2})_{qA6}- 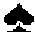
dans lequel pA1, pA2, pA3 sont chacun 0 ou 1, dans lequel le cas "pA2 = 0, pA1 = pA3 = 1" est exclu,
dans lequel qA1, qA2, qA3 sont chacun 0 ou 1, dans lequel le cas "qA2 = 0, qA1 = qA3 = 1" est exclu,
dans lequel qA4, qA5, qA6 sont chacun 0 ou 1, dans lequel au moins un des qA4, qA5, qA6 est = 1 et dans lequel le cas "qA5 = 0, qA4 = qA6 = 1" est exclu,
dans lequel X^{SP2}, Y^{SP2} sont chacun indépendamment les uns des autres NH ou O, de préférence tous les deux sont O,
dans lequel B^{Sp} est choisi dans le groupe constitué par un
groupement (hétéro)aromatique divalent,
groupement divalent, optionnellement avec au moins un groupe choisi dans le groupe nitro, -NH₂, -CN, -SH, -OH, substitué par un halogène, et optionnellement avec au moins un groupe choisi dans éther, thioéther, aminoéther, groupe carbonyle, ester d'acide carboxylique, groupe amide d'acide carboxylique, ester d'acide sulfonique, ester d'acide phosphorique, ayant un groupement aliphatique.
et dans lequel, dans les cas où Sp se lie à un atome du groupe R^{X} différent du carbone, pour la structure **(Sp1)**, la condition supplémentaire "qA3 = 0, qA2 = 1, qA1 = 1 ou qA3 = qA2 = qA1 = 0 ou qA3 = 0, qA2 = 1, qA1 = 0" s'applique, et pour la structure **(Sp2),** la condition supplémentaire "qA6 = 0, qA5 = 1, qA4 = 1 ou qA6 = 0, qA5 = 1, qA4 = 0" s'applique,
et dans lequel "4" marque la liaison pointant vers R^{X},
et dans lequel "4" marque la liaison pointant vers W.

11. Matériau d'électrode selon la revendication 8, dans lequel le polymère organique à activité redox **P_{Redox}** est un polyimide comprenant n unités répétitives choisies dans les formules structurelles suivantes **(III-A)**, **(III-B)**, **(III-C)**, **(III-D)**: 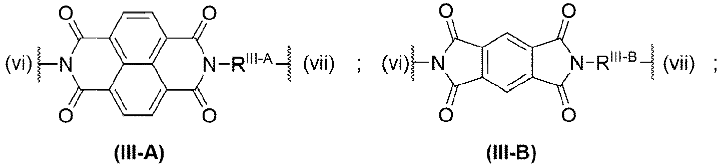 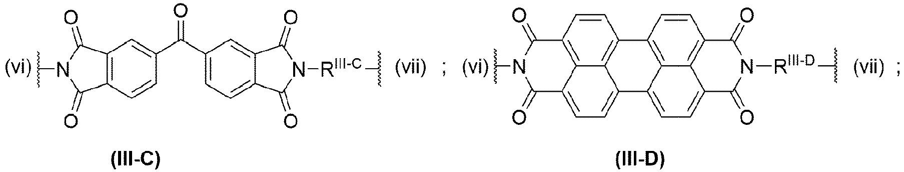
dans lequel R^{III-A}, R^{III-B}, R^{III-C}, R^{III-D} sont chacun indépendamment les uns des autres choisi dans le groupe constitué par liaison directe, groupe carbonyle, groupe alkylène, groupe hydrocarbure aromatique divalent, dans lequel le groupe alkylène peut être interrompu par un groupe carbonyle,
et dans lequel, dans les formules structurelles **(III-A)**, **(III-B)**, **(III-C)**, **(III-D),** au moins un atome de carbone aromatique peut être substitué par un groupe choisi dans alkyle, halogène, alcoxy, OH,
et dans lequel n est respectivement un nombre entier ≥ 4,
et dans lequel la liaison marquée par "(vi)" lie une unité répétitive de la formule structurelle **(III-A)**, **(III-B)**, **(III-C),** ou **(III-D)** à la liaison marquée par "(vii)" de l'unité répétitive adjacente.

12. Matériau d'électrode selon l'une quelconque des revendications 1 à 11, dans lequel l'au moins un additif de conductivité **L** est choisi dans le groupe constitué par des matériaux carbonés, des polymères conducteurs d'électricité, des métaux, des semi-métaux, des composés semi-métalliques, des composés métalliques.

13. Matériau d'électrode selon l'une quelconque des revendications 1 à 12, dans lequel le rapport du poids total de tous les additifs de conductivité **L** au poids total de tous les polymères organiques à activité redox **P_{Redox}** se situe entre 0,1 et 1000 % en poids.

14. Matériau d'électrode selon l'une quelconque des revendications 1 à 13, comprenant au moins un liquide ionique **IL₁**.

15. Matériau d'électrode selon la revendication 14, dans lequel le liquide ionique **IL₁** a la structure Q⁺A⁻, dans lequel Q⁺ est un cation choisi dans le groupe constitué par des structures suivantes **(Q1)**, **(Q2)**, **(Q3)**, **(Q4)**, **(Q5)**: 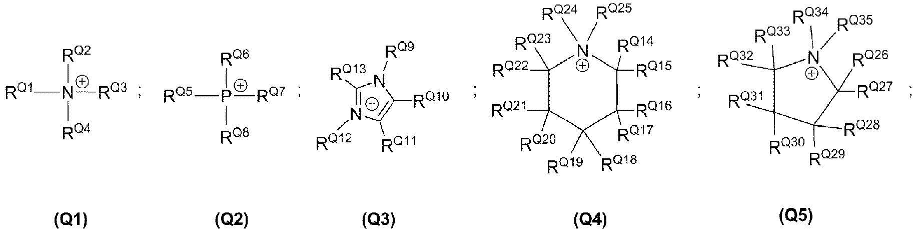
dans lequel R^{Q1}, R^{Q2}, R^{Q3}, R^{Q4}, R^{Q5}, R^{Q6}, R^{Q7}, R^{Q8} sont chacun indépendamment les uns des autres choisi dans le groupe constitué par groupe alkyle, groupe haloalkyle, groupe cycloalkyle,
dans lequel R^{Q9}, R^{Q10}, R^{Q11}, R^{Q12}, R^{Q13}, R^{Q14}, R^{Q15}, R^{Q16}, R^{Q17}, R^{Q18}, R^{Q19}, R^{Q20}, R^{Q21}, R^{Q22}, R^{Q23}, R^{Q24}, R^{Q25}, R^{Q26}, R^{Q27}, R^{Q28}, R^{Q29}, R^{Q30}, R^{Q31}, R^{Q32}, R^{Q33}, R^{Q34}, R^{Q35} sont chacun indépendamment les uns des autres choisis dans le groupe constitué par groupe alkyle, groupe haloalkyle, groupe cycloalkyle,
et dans lequel A⁻ est un anion choisi dans le groupe constitué par phosphate, phosphonate, alkylphosphonate, monoalkylphosphate, dialkylphosphate, bis[trifluorométhanesulfonyl]imide, alkylsulfonate, haloalkylsulfonate, alkylsulfate, haloalkylsulfate, bis[fluorosulfonyl]imide, halogénure, dicyanamide, hexafluorophosphate, sulfate, tétrafluoroborate, trifluorométhanesulfonate, perchlorate, sulfate d'hydrogène, haloalkylcarboxylate, alkylcarboxylate, formiate, bisoxalatoborate, tétrachloroaluminate, dihydrogénophosphate, monoalkylhydrogénophosphate, nitrate.

16. Matériau d'électrode selon la revendication 14 ou 15, dans lequel le liquide ionique **IL₁** a un point de fusion ≤ 100 °C.

17. Matériau d'électrode selon l'une quelconque des revendications 14 à 16, dans lequel le rapport du poids total de tous les liquides ioniques **IL₁** compris dans le matériau d'électrode au poids total de tous les polymères organiques à activité redox **P_{Redox}** compris dans le matériau d'électrode se situe entre 0,1 et 1000 % en poids.

18. Matériau d'électrode, en particulier pâte d'électrode, selon l'une quelconque des revendications 1 à 17, comprenant en outre au moins un solvant choisi dans le groupe constitué par eau, alcools, éthers, esters, cétones.

19. Electrode comprenant un matériau d'électrode selon l'une quelconque des revendications 1 à 17 et un substrat.

20. Dispositif de stockage de charge, en particulier batterie secondaire, comprenant au moins une électrode selon la revendication 19.

21. Dispositif de stockage de charge selon la revendication 20, comprenant au moins deux électrodes, dans lequel au moins une des électrodes comprend au moins un matériau d'électrode selon la revendication 8.

22. Dispositif de stockage de charge selon la revendication 20 ou 21, comprenant en outre au moins un électrolyte, en particulier comprenant au moins un liquide ionique **IL₂**.

23. Utilisation du matériau d'électrode selon l'une quelconque des revendications 1 à 18 comme encre dans des procédés d'impression.
